# EUROPÄISCHE PATENTSCHRIFT

(11) **EP 3 700 790 B1**
(45) Veröffentlichungstag und Bekanntmachung des Hinweises auf die Patenterteilung: **29.01.2025**
(21) Anmeldenummer: 18800051.7
(22) Anmeldetag: 24.10.2018
(51) Int. Cl.: B60T 17/16, B60T 15/04, F16D 65/28, F16D 121/04, F16D 127/06, F16D 129/02

(54) **ANORDNUNG MIT EINEM BREMSKRAFTERZEUGER UND VERFAHREN ZUM BETREIBEN EINES BREMSKRAFTERZEUGERS**
ARRANGEMENT WITH A BRAKE FORCE GENERATOR AND METHOD FOR OPERATING A BRAKE FORCE GENERATOR
DISPOSITIF COMPRENANT UN GENERATEUR DE FORCE DE FREINAGE ET PROCEDE DE FONCTIONNEMENT D'UN GENERATEUR DE FORCE DE FREINAGE

(30) Priorität: 26.10.2017 DE 102017125073
(43) Veröffentlichungstag der Anmeldung: 02.09.2020
(73) Patentinhaber: KNORR-BREMSE Systeme für Schienenfahrzeuge GmbH, 80809 München (DE)
(72) Erfinder: AURICH, Stefan, 86316 Friedberg (DE); ELSTORPFF, Marc-Gregory, 80368 München (DE); HECHT, Ferdinand, 85229 Markt Indersdorf (DE)
(86) Internationale Anmeldenummer: PCT/EP2018/079099
(87) Internationale Veröffentlichungsnummer: WO 2019/081552

(56) Entgegenhaltungen:
- EP-A1- 1 265 769
- EP-B1- 1 265 769
- DE-A1- 102012 002 638
- DE-A1- 19 502 927
- GB-A- 2 399 144

## Beschreibung

Die Erfindung betrifft eine Anordnung mit einem Bremskrafterzeuger nach dem Oberbegriff der Ansprüche 1 oder 7. Die Erfindung bezieht sich auch auf ein Verfahren zum Betreiben eines Bremskrafterzeugers.

Anordnungen mit Bremskrafterzeugern für Bremsen von Fahrzeugen, z.B. Nutzfahrzeuge, Schienenfahrzeuge, wobei der Bremskrafterzeuger einen Bremszylinder mit einer Betriebsbremsfunktion und einer Park-/Feststellbremsfunktion aufweist, sind in vielen Anwendungen bekannt.

Eine Park-/Feststellbremsfunktion mit einem Bremskrafterzeuger kann dadurch realisiert werden, indem durch einen Federspeicher eine Kraft ausgeübt wird, die für unbegrenzte Zeit wirkt und so die Feststellbremskraft für ein Fahrzeug zuverlässig ohne zeitliche Beschränkung bereitstellt. Der Federspeicher ist in den meisten Anwendungen eine zusätzliche Komponente, die nur für die Realisierung der Park-/Feststellbremsfunktion benötigt wird, da die betriebliche Bremsfunktion über einen Kolben realisiert wird, der mit einem Betätigungsdruck beaufschlagt wird. Dabei wird es als nachteilig angesehen, dass für die Betriebsbremse und für die Park-/Feststellbremse jeweils eine eigene Druckleitung benötigt wird.

Eine andere Realisierung gibt an, dass die Park-/Feststellbremskraft durch den Kolben, der auch für die Erzeugung der Betriebsbremskraft verwendet wird, bereitgestellt wird. In diesem Fall wird der Kolben als Betriebsbremskolben mit einem Druck beaufschlagt, der ein Bremsgestänge betätigt und die Bremse anlegt. Gleichzeitig wird das Bremsgestänge elastisch verformt. In diesem angelegten bzw. zugespannten Zustand wird jetzt der Betriebsbremskolben bzw. die dazu gehörige Kolbenstange durch ein Verriegelungselement verriegelt. Die elastische Vorspannung des Bremsgestänges bleibt auf diese Weise erhalten, auch wenn der Betätigungsdruck des Betriebsbremskolbens sich verringert und nicht mehr vorhanden ist. Die Bremse verbleibt auf diese Weise im angelegten, also zugespannten Zustand und bildet eine Park-/Feststellbremsfunktion.

Dabei wird zwar der Federspeicherteil nicht benötigt, jedoch ist weiterhin eine erste Druckmittelleitung für den Betriebsbremskolben sowie eine zweite Druckmittelleitung zur Betätigung der Verriegelung erforderlich.

DE 195 02 927 A1 betrifft eine kombinierte Betriebs- und Feststellbremse mit einer hydraulische Betätigungsvorrichtung, die einen Bremszylinder und einen Bremskolben aufweist, und eine hydraulisch betätigbare Feststellvorrichtung zum Arretieren des Bremskolbens im zugespannten Zustand. Die Feststellvorrichtung ist über die für die Betriebsbremsung vorgesehene hydraulische Zuleitung durch einen Druckstoß betätigbar, der in einem Druckbereich oberhalb des für Betriebsbremsungen vorgesehenen Druckbereichs liegt.

GB 2 399 144 A beschreibt eine Bremsbetätigungsvorrichtung zur Verwendung als Betriebs- und Feststellbremse mit einem Betätigungsteil, das zwischen einer betätigten und einer gelösten Bremse bewegbar ist, wobei das Betätigungsteil einen ersten Abschnitt, der rohrförmig und mit einer Membran verbunden oder ein Kolben sein kann, und einen zweiten Abschnitt mit einer Stange aufweist, die über ein Vorspannelement zur Bewegung relativ zum ersten Abschnitt angebracht ist. Ein Verriegelungsmechanismus, der entweder ein gezahnter Kolben, der mit einem gezahnten Abschnitt am ersten Teil in Eingriff steht, oder ein radial beweglicher Stift sein kann, ist betätigbar, um das Betätigungsteil als Feststellbremse in der Betriebsstellung zu halten. Das Vorspannelement bedeutet, dass das Betätigungsteil von variabler Länge ist und eine übermäßige Krafteinwirkung auf die Bremse verhindert und die Feststellbremsung bei kühlungsbedingter Kontraktion der Bremsbeläge oder Bremsscheiben aufrechterhält.

DE 10 2012 002638 A1 gibt einen kombinierten Betriebs- und Feststellbremszylinder für ein Fahrzeug an, beinhaltend einen in einem Betriebsbremszylinder angeordneten und von einem abhängig von der Betätigung eines Betriebsbremsbetätigungsorgans gebildeten Betriebsbremsdruck gesteuerten Betriebsbremskolben, welcher einen Bremsmechanismus betätigt sowie einen Feststellbremszylinder mit einer druckbeaufschlagbaren oder druckentlastbaren Steuerkammer, um einen mittels einer Verriegelungseinrichtung verriegelbaren Feststellbremskolben zu steuern, wobei auf ein Feststellbremssignal hin der Feststellbremskolben durch die Verriegelungseinrichtung in einer Stellung verriegelbar ist, in welcher er den im Rahmen einer Betriebsbremsung in Zuspannstellung gebrachten Betriebsbremskolben in Zuspannstellung hält. Sowohl die Verriegelungseinrichtung als auch der Feststellbremskolben sind vom Betriebsbremsdruck druckmittelgesteuert.

EP 1 265 769 A1 betrifft ein sicherheitserhöhendes automatisches Bremssteuerungssystem, welches die Bremsen automatisch betätigt und sie im betätigten Zustand hält, wenn an verschiedenen Stellen um/im Fahrzeug oder in der Ausrüstung eine oder mehrere Bedingungen vorliegen, die die Fahrzeugbewegung gefährlich machen. Eine Steuerung verbindet sich elektrisch, elektronisch oder auf andere Weise mit verschiedenen Sensoren an den Fahrzeugstationen, validiert das/die Signal(e) und betätigt dann einen Mechanismus, der die Luft, Bremsflüssigkeit, mechanische Bremsverbindung/-kabel, elektrische oder andere Mechanismen steuert, und die Bremse. In einem Druckluftbremssystem blockiert und entlüftet ein Magnetventil die Luftleitung, um einen Kolben freizugeben, der normalerweise einem Federmechanismus entgegenwirkt. In einem hydraulischen Bremssystem treibt beispielsweise ein Kolben oder eine Feder eine sekundäre Kolbenstange und einen Kolben in einem Hauptzylinder an, um die Bremsen zu betätigen. Im Falle eines federbetätigten Systems kann eine Löseeinheit, beispielsweise ein Kolben, verwendet werden, um der Feder zum Lösen der Bremsen entgegenzuwirken. Wenn der Fahrer die Feststellbremse bei Bedarf nicht manuell betätigt, aktiviert das Steuersystem automatisch eine Bremse, sobald ein potenziell gefährlicher Zustand erkannt und von der Steuerung validiert wird. Das Steuersystem umfasst ein Fahrzeugbewegungs-Überbrückungssystem, das die automatische Betätigung der Bremsen verhindert, wenn sich das Fahrzeug über einer eingestellten Geschwindigkeit bewegt, und eine manuelle Bremsfreigabe-Überbrückung, die es einem Fahrer ermöglicht, die Steuerung nach eigenem Ermessen vorübergehend außer Kraft zu setzen .

Daher besteht die Aufgabe der Erfindung darin, eine verbesserte Anordnung mit einem Bremskrafterzeuger zu schaffen.

Eine weitere Aufgabe der Erfindung ist es, ein verbessertes Verfahren zum Betreiben eines Bremskrafterzeugers bereitzustellen Die Aufgabe wird durch eine Anordnung mit den Merkmalen der Ansprüche 1 oder 7 gelöst.

Die weitere Aufgabe wird durch ein Verfahren mit den Merkmalen des Anspruchs 8 gelöst.

Eine erfindungsgemäße Anordnung umfasst einen Bremskrafterzeuger für eine Bremse eines Fahrzeugs, eine Betätigungseinheit, einen Druckspeicher und eine Bremsleitung, welche die Betätigungseinheit mit dem Bremskrafterzeuger verbindet, wobei der Bremskrafterzeuger einen Bremszylinder mit einer Betriebsbremsfunktion und einer Park-/Feststellbremsfunktion aufweist. Der Bremszylinder ist mit einer Feststellsteuerung der Park-/Feststellbremsfunktion versehen, wobei die Feststellsteuerung mit der einen Bremsleitung des Bremszylinders kommuniziert.

Es ist dabei von bedeutendem Vorteil, dass nur eine einzige Bremsleitung sowohl zur Aktivierung der Betriebsbremsfunktion als auch zur Aktivierung und Deaktivierung der Park-/Feststellbremsfunkton benötigt wird. Unter dem Kommunizieren der Feststellsteuerung mit der einen Bremsleitung des Bremszylinders ist zu verstehen, dass die Feststellsteuerung mit der einen Bremsleitung des Bremszylinders verbunden ist.

Ein nicht zu dieser Erfindung gehörender Bremskrafterzeuger weist einen Bremszylinder mit einer Betriebsbremsfunktion und einer Park-/Feststellbremsfunktion auf, wobei der Bremszylinder einen Anschluss für eine Bremsleitung aufweist. Der Bremszylinder ist mit einer Feststellsteuerung der Park-/Feststellbremsfunktion versehen, wobei die Feststellsteuerung mit dem Anschluss der einen Bremsleitung oder/und einer Betriebsbremsdruckkammer des Bremszylinders kommuniziert.

Damit ergibt sich mit dem nicht zu dieser Erfindung gehörenden Bremskrafterzeuger, dass auf eine zweite Betätigungsleitung der Feststellsteuerung zusätzlich zu der Bremsleitung verzichtet werden kann.

Ein erfindungsgemäßes Verfahren zum Betreiben eines Bremskrafterzeugers, welcher eine Bremsfunktion und eine Park-/Feststellbremsfunktion aufweist, in der oben beschriebenen Anordnung weist die Verfahrensschritte auf:
(i1) Beaufschlagen des Bremskrafterzeugers mit einem veränderlichen Bremsdruck über eine Bremsleitung zum Durchführen eines Bremsvorgangs; (i2) Aktivieren der Park-/Feststellbremsfunktion durch einen Setzvorgang, indem der Bremskrafterzeugers über dieselbe Bremsleitung mit einem Setzdruck, der größer als der maximale Bremsdruck ist, beaufschlagt wird; und (i3) Deaktivieren der Park-/Feststellbremsfunktion durch einen Rücksetzvorgang, indem der Bremskrafterzeuger über dieselbe Bremsleitung mit einem Rücksetzdruck beaufschlagt wird, der größer als der Setzdruck oder gleich dem Setzdruck und größer als der maximale Bremsdruck ist.

Die Bremsfunktion des Bremskrafterzeugers wird durch Beaufschlagung des Betriebsbremskolbens mit einem veränderlichen Bremsdruck erzielt. Solange der Bremsdruck in einem Bereich bis zu einem maximalen Bremsdruck verändert wird, wobei ein Druckaufbau und ein Druckabbau möglich ist, wird durch den Bremskolben Bremskraft auf die Bremse aufgebracht und entsprechend dem veränderlichen Bremsdruck erhöht und/oder verringert.

Wird nun der Druck auf den Setzdruck über den maximalen Bremsdruck erhöht, kann damit die Park-/Feststellbremsfunktion vorteilhaft einfach aktiviert werden.

Bei einer weiteren Druckerhöhung über den Setzdruck kann damit die Park-/Feststellbremsfunktion ebenfalls vorteilhaft einfach deaktiviert werden.

Weitere vorteilhafte Ausbildungen der Erfindung sind in den Unteransprüchen angegeben.

In erfindungsgemäßer Ausführung stellt die Betätigungseinheit von dem Druckspeicher einen veränderlichen Bremsdruck, einen Setzdruck und einen Rücksetzdruck bereit, wobei die eine Bremsleitung mit dem veränderlichen Bremsdruck, dem Setzdruck und dem Rücksetzdruck beaufschlagbar ist. Hierbei ist der bedeutende Vorteil die Einsparung einer zusätzlichen Druckmittelleitung zur Betätigung der Park-/Feststellfunktion.

Die erfindungsgemäße Ausführung sieht vor, dass der Setzdruck größer als ein maximaler Bremsdruck des veränderlichen Bremsdrucks ist, und wobei der Rücksetzdruck größer als der Setzdruck oder gleich dem Setzdruck ist. Damit ist es vorteilhaft einfach möglich, durch Druckerhöhungen in derselben Bremsleitung sowohl die Betriebsbremsfunktion als auch die Park-/Feststellbremsfunktion zu betätigen.

Es ist erfindungsgemäß weiterhin vorgesehen, dass die Betätigungseinheit eine Druckaufbereitung, einen Betriebsbremsbetätiger, einen ersten Feststellbremsbetätiger und einen zweiten Feststellbremsbetätiger aufweist, wobei Ausgänge der Betätiger untereinander und gemeinsam mit der Bremsleitung verbunden sind. Hierbei besteht ein großer Vorteil darin, dass mittels der Betätiger die verschiedenen Druckwerte voreingestellt in die Bremsleitung eingeleitet werden können. Dazu können die Betätiger z.B. Reduzierventile für den jeweiligen Druckwert aufweisen. Alternativ ist es auch möglich, dass die verschiedenen Druckwerte von der Druckaufbereitung bereitgestellt werden.

In der erfindungsgemäßen Ausführung beaufschlagt der Betriebsbremsbetätiger die Bremsleitung und somit den Bremskrafterzeuger für die Bremsfunktion mit dem veränderlichen Bremsdruck, und der erste Feststellbremsbetätiger beaufschlagt die Bremsleitung und somit den Bremskrafterzeuger mit dem Setzdruck und aktiviert damit die Feststellbremsfunktion des Bremskrafterzeugers, und der zweite Feststellbremsbetätiger beaufschlagt die Bremsleitung und somit den Bremskrafterzeuger mit dem Rücksetzdruck und deaktiviert damit die Feststellbremsfunktion des Bremskrafterzeugers. Damit ist eine vorteilhaft einfache Druckbeaufschlagung ermöglicht. Die Feststellbremsbetätiger können z.B. einzelne Taster sein. Es ist natürlich auch ein Drehhebel denkbar.

In der erfindungsgemäßen Ausführung ist es vorgesehen, dass die Feststellsteuerung eine Selektionseinheit, eine Schalteinheit, und eine Verriegelungseinheit umfasst, wobei die Selektionseinheit mit der Bremsleitung direkt oder indirekt über den Bremszylinder verbunden ist, mit der Schalteinheit zusammenwirkt, wobei die Schalteinheit mit der Verriegelungseinheit gekoppelt ist, und wobei die Verriegelungseinheit in Zusammenwirkung mit einer Kolbenstange oder/und einem Betriebsbremskolben des Bremszylinders steht. Damit ergibt sich ein kompakter Aufbau.

So ist in der erfindungsgemäßen Ausführung vorgesehen, dass die Feststellsteuerung durch Beaufschlagung mit dem Setzdruck die Verriegelungseinheit aus einer unverriegelten Stellung, in welcher die Verriegelungseinheit und die Kolbenstange oder/und der Betriebsbremskolben des Bremszylinders außer Eingriff sind, in eine verriegelte Stellung, in welcher die Verriegelungseinheit und die Kolbenstange oder/und der Betriebsbremskolben des Bremszylinders in Eingriff sind und eine Bewegung des Betriebsbremskolbens blockiert ist, verstellt. Durch den Setzdruck kann die Park-/Feststellbremse einfach aktiviert werden, indem der Bremskolben blockiert wird. Wird nun der Druck wieder abgebaut, verbleibt der Bremskolben in der blockierten Stellung, wobei die Park-/Feststellbremsfunktion aktiviert bleibt, ohne dass eine Druckmittelbetätigung aufrecht erhalten werden muss. Dadurch ergibt sich der besondere Vorteil, dass bei einem Defekt, z.B. Riss, der Bremsleitung die bereits aktivierte Park-/Feststellbremsfunktion weiter erhalten bleibt.

Es ist in einer anderen Ausführung der Erfindung vorgesehen, dass die Feststellsteuerung durch Beaufschlagung mit dem Rücksetzdruck die Verriegelungseinheit aus der verriegelten Stellung in die unverriegelte Stellung zurück verstellt. Diese Deaktivierung ist vorteilhaft einfach, da nur ein höherer Druck erforderlich ist, der in die Bremsleitung eingeleitet wird. Ein zeitliche Länge dieser Druckbeaufschlagung ist kurz, da nur die Verriegelung gelöst werden muss. Da beim Beaufschlagen der Bremsleitung mit dem Rücksetzdruck beim Druckaufbau der maximale Bremsdruck überschritte wird, wird der Bremskolben etwas weiter zugespannt, wodurch ein Lösen der Verriegelungseinheit erleichtert wird.

Es ist in einer noch anderen Ausführung der Erfindung vorteilhaft, wenn die verriegelte Stellung der Verriegelungseinheit und die unverriegelte Stellung der Verriegelungseinheit selbsthaltend ausgebildet sind, da dann keine Energie zur ständigen Erhaltung der Selbsthaltung benötigt wird.

In einer anderen Ausführung der Erfindung ist die Schalteinheit der Feststellsteuerung ein binärer Speicher bzw. ein bistabile Kippstufe mit zwei stabilen Zuständen und zwei Eingängen, wobei ein Setzeingang durch den Setzdruck aktivierbar ist, und wobei ein Rücksetzeingang durch den Rücksetzdruck aktivierbar ist, wobei der erste stabile Zustand der unverriegelten Stellung der Verriegelungseinheit zugeordnet ist, und wobei der zweite stabile Zustand der verriegelten Stellung der Verriegelungseinheit zugeordnet ist. Ein solches so genanntes RS-Flipflop lässt sich anhand von Konstruktionskatalogen in geeigneter Weise für die verschiedenen Einsatzfälle einfach ermitteln und anpassen.

Eine andere Ausführung der Erfindung sieht vor, dass die Selektionseinheit und die Schalteinheit der Feststellsteuerung einen binären Speicher bzw. eine bistabile Kippstufe mit zwei stabilen Zuständen und einem gemeinsamen Eingang als ein T-Flipflop bilden. Damit ist ein Aufbau mit einer geringen Teilezahl möglich. Dadurch kann auch erreicht werden, dass der Setzdruck auch als Rücksetzdruck verwendbar ist.

In der erfindungsgemäßen Ausführung ist die Selektionseinheit der Feststellsteuerung mit druckabhängigen Ventilen so ausgebildet, dass die Selektionseinheit den veränderlichen Bremsdruck, den Setzdruck und den Rücksetzdruck unterscheidet und sowohl den Setzdruck als auch den Rücksetzdruck unabhängig voneinander der Feststellsteuerung bereitstellt. Der Vorteil der Selektionseinheit besteht darin, dass eine Unterscheidung der verschiedenen Druckwerte einfach möglich ist, um die Steuerungsfunktionen exakt voneinander zu trennen. Dies kann z.B. durch druckabhängige Ventile realisiert werden, die marktüblich in hoher Qualität verfügbar sind.

Die erfindungsgemäße Anordnung sieht vor, dass der Setzdruck und der Rücksetzdruck jeweils eine Druckabfolge mit einer jeweils unterschiedlichen Anzahl von Druckerhöhungen bilden, wobei die Selektionseinheit der Feststellsteuerung einen Zähler mit einem vorher festlegbaren Summenwert aufweist. Damit kann eine einfache Selektion der unterschiedlichen Setzdrücke erfolgen.

In einer Ausführung der Erfindung ist die Feststellsteuerung an dem Bremszylinder, an einem Fahrwerk, Rahmen oder/und Drehgestell eines zugeordneten Fahrzeugs angebracht, oder/und die Feststellsteuerung ist in dem Bremszylinder angebracht/integriert. Damit kann ein kompakter Aufbau realisiert werden.

Ein besonders vorteilhafter kompakter Aufbau in einer alternativen Ausführung der Erfindung kann sich ergeben, wenn die Feststellsteuerung eine Verriegelungseinheit und eine bistabile Schalteinrichtung aufweist, wobei die Feststellsteuerung in dem Bremszylinder angeordnet ist.

Eine Ausführung des nicht zu dieser Erfindung gehörenden Bremskrafterzeugers sieht vor, dass die Feststellsteuerung eine Selektionseinheit, eine Schalteinheit und eine Verriegelungseinheit umfasst, wobei die Selektionseinheit mit dem Anschluss der Bremsleitung direkt oder indirekt über den Bremszylinder verbunden ist, mit der Schalteinheit zusammenwirkt, wobei die Schalteinheit mit der Verriegelungseinheit gekoppelt ist, und wobei die Verriegelungseinheit in Zusammenwirkung mit einer Kolbenstange oder/und einem Betriebsbremskolben des Bremszylinders steht. Dies ergibt einen kompakten Aufbau, wobei die Feststellsteuerung an dem Bremszylinder oder/und in dem Bremszylinder angeordnet bzw. integriert ist.

In einer weiteren Ausführung des nicht zu dieser Erfindung gehörenden Bremskrafterzeugers verstellt die Feststellsteuerung durch Beaufschlagung mit einem Setzdruck, der größer als ein maximaler Bremsdruck, die Verriegelungseinheit aus einer unverriegelten Stellung, in welcher die Verriegelungseinheit und die Kolbenstange oder/und der Betriebsbremskolben des Bremszylinders außer Eingriff sind, in eine verriegelte Stellung, in welcher die Verriegelungseinheit und die Kolbenstange oder/und der Betriebsbremskolben des Bremszylinders in Eingriff sind und eine Bewegung des Betriebsbremskolbens blockiert ist.

Wird der Setzdruck erreicht bzw. überschritten, wird der Verriegelungsmechanismus bzw. die Verriegelungseinheit zur Verriegelung des Betriebsbremskolbens betätigt. Der Betriebsbremskolben kann dann bei Abbau des Drucks nicht folgen, die Bremskraft der Park-/Feststellbremse bleibt vorteilhaft unabhängig vom Vorhandensein des Bremszylinderdrucks zeitlich unbegrenzt erhalten.

Eine noch weitere Ausführung des nicht zu dieser Erfindung gehörenden Bremskrafterzeugers Bremskrafterzeugers sieht vor, dass die Feststellsteuerung durch Beaufschlagung mit einem Rücksetzdruck, der größer als der Setzdruck oder gleich dem Setzdruck ist, die Verriegelungseinheit aus der verriegelten Stellung in die unverriegelte Stellung zurück verstellt.

Zum Lösen der Bremskraft der Park-/Feststellbremse wird nun der Bremsdruck ein weiteres Mal bis zu dem Rücksetzdruck aufgebaut und über diesen Wert angehoben. Dadurch wird die Verriegelungseinheit gelöst, die Bremskraft kann abgebaut werden, und die Bremse wird wieder gelöst.

Bei dem nicht zu dieser Erfindung gehörenden Bremskrafterzeuger ist es von Vorteil, wenn die verriegelte Stellung der Verriegelungseinheit und die unverriegelte Stellung der Verriegelungseinheit selbsthaltend ausgebildet sind. Dann ist keine zusätzliche Druckmittelenergie zum Halten der jeweiligen Stellung notwendig.

Eine weitere vorteilhafte Ausführung des nicht zu dieser Erfindung gehörenden Bremskrafterzeugers ergibt sich, wenn die Schalteinheit der Feststellsteuerung ein binärer Speicher bzw. ein bistabile Kippstufe mit zwei stabilen Zuständen und zwei Eingängen ist, wobei ein Setzeingang durch den Setzdruck aktivierbar ist, und wobei ein Rücksetzeingang durch den Rücksetzdruck aktivierbar ist, wobei der erste stabile Zustand der unverriegelten Stellung der Verriegelungseinheit zugeordnet ist, und wobei der zweite stabile Zustand der verriegelten Stellung der Verriegelungseinheit zugeordnet ist.

Wenn die Selektionseinheit der Feststellsteuerung in der Ausführung des nicht zu dieser Erfindung gehörenden Bremskrafterzeugers so ausgebildet ist, dass die Selektionseinheit einen veränderlichen Bremsdruck, den Setzdruck und den Rücksetzdruck unterscheidet und sowohl den Setzdruck als auch den Rücksetzdruck unabhängig voneinander der Feststellsteuerung bereitstellt, ergibt sich eine vorteilhaft kompakte Baueinheit mit mehreren Funktionen.

In der erfindungsgemäßen Ausführung des Verfahrens können der Setzdruck und der Rücksetzdruck jeweils eine Druckabfolge mit einer jeweils unterschiedlichen Anzahl von Druckerhöhungen bilden, wobei die Selektionseinheit der Feststellsteuerung mit einem Zähler die jeweils unterschiedliche Anzahl von Druckerhöhungen ermittelt und den Setzvorgang und den Rücksetzvorgang durch einen Vergleich der jeweiligen gezählten Anzahl von Druckerhöhungen mit einem vorher festlegbaren Summenwert unterscheidet und durchführt. Hierzu kann ein einfacher mechanischer Zähler mit großer Zuverlässigkeit zur Anwendung kommen.

Durch die Ausgestaltung des nicht zu dieser Erfindung gehörenden Bremskrafterzeugers ergibt sich vorteilhaft, dass auf eine zweite Druckmittelleitung für die Park-/Feststellbremsfunktion verzichtet werden kann.

Außerdem besteht ein bedeutender Vorteil darin, dass ein Leitungsbruch/-riss der Bremsleitung zu keinerlei Fehlfunktion der Parkbremse durch ungewolltes Anlegen führen kann.

Die Erfindung kann nicht nur bei spurgebundenen Fahrzeugen, wie z.B. Schienenfahrzeugen, sondern auch bei anderen, nicht spurgebundenen Fahrzeugen, wie z.B. Nutzfahrzeugen, zur Anwendung kommen. Es ist auch möglich, dass die Erfindung z.B. bei Maschinenbremsen eingesetzt werden kann.

Ausführungsbeispiele der Erfindung werden nachfolgend anhand der beigefügten Zeichnungen beschrieben.

Es zeigen:
- Figur 1-2: schematische Blockschaltbilder eines ersten Ausführungsbeispiels einer erfindungsgemäßen Anordnung eines Bremskrafterzeugers;
- Figur 3-4: schematische Darstellungen verschiedener Druckverläufe im Zusammenhang mit einem Zustand einer Verriegelungseinrichtung;
- Figur 5: eine schematische Teilschnittdarstellung eines ersten Ausführungsbeispiels eines erfindungsgemäßen Bremskrafterzeugers der Anordnung nach Figur 1 und 2;
- Figur 6: ein schematisches Blockschaltbild eines zweiten Ausführungsbeispiels einer erfindungsgemäßen Anordnung eines Bremskrafterzeugers;
- Figur 7: eine schematische Teilschnittdarstellung eines zweiten Ausführungsbeispiels eines erfindungsgemäßen Bremskrafterzeugers der Anordnung nach Figur 6;
- Figur 8-9: schematische Darstellungen verschiedener Druckverläufe im Zusammenhang mit einem Zustand einer Verriegelungseinrichtung des zweiten Ausführungsbeispiels nach Figur 6;
- Figur 10-11: schematische Darstellungen weiterer verschiedener Druckverläufe im Zusammenhang mit einem Zustand einer weiteren Verriegelungseinrichtung;
- Figur 12: ein schematisches Blockschaltbild eines dritten Ausführungsbeispiels einer erfindungsgemäßen Anordnung eines Bremskrafterzeugers, und
- Figur 13: ein schematisches Flussdiagramm eines erfindungsgemäßen Verfahrens.

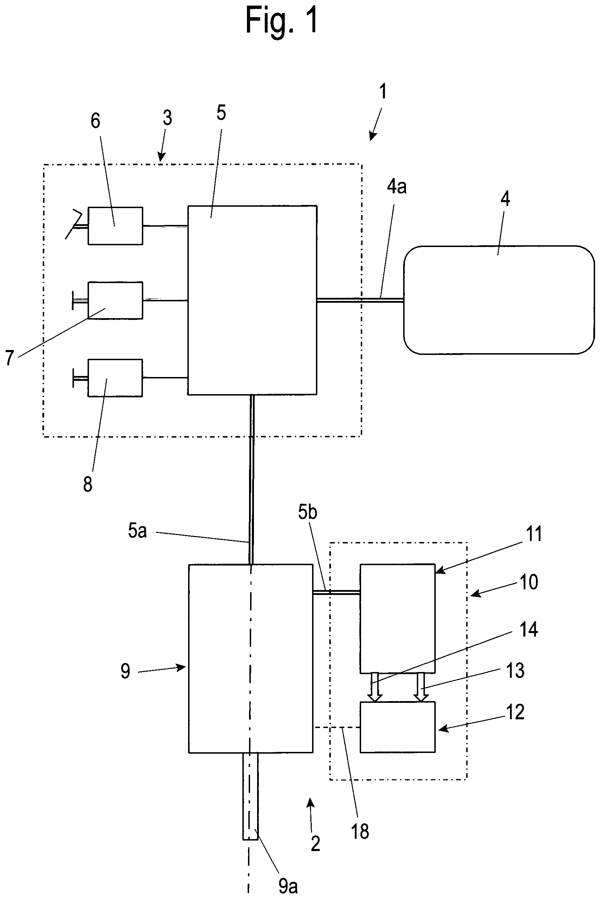

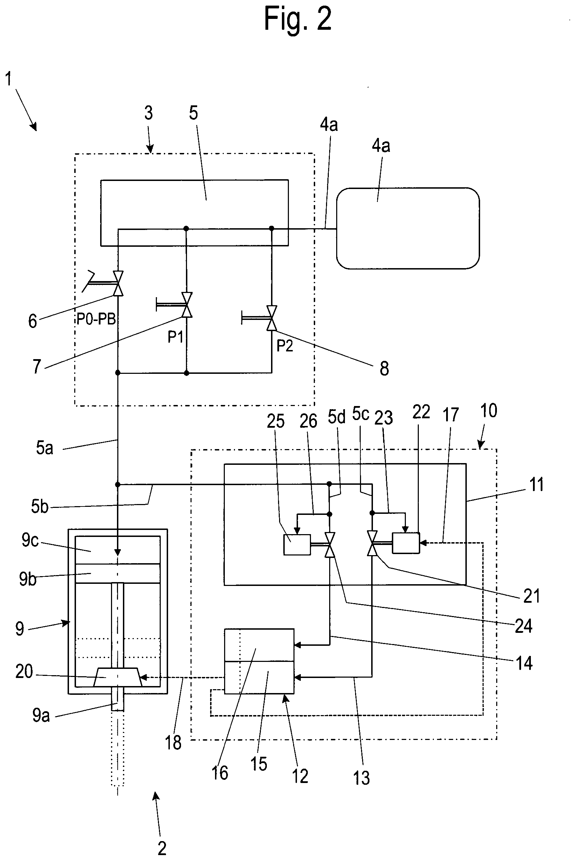

**Figur 1** zeigt ein schematisches Blockschaltbild eines Ausführungsbeispiels einer erfindungsgemäßen Anordnung 1 eines Bremskrafterzeugers 2. In **Figur 2** ist eine detailliertere Darstellung des Ausführungsbeispiels nach Figur 1 gezeigt.

Die Begriffe "Parkbremse" und "Feststellbremse" sind identisch.

Unter dem Begriff "Setzen" ist ein Aktivieren bzw. Einschalten zu verstehen. Der Begriff "Rücksetzen" bedeutet ein Deaktivieren bzw. Ausschalten.

Die Anordnung 1 zeigt schematisch einen druckluftbetriebenen Bremskrafterzeuger 2 beispielhaft für eine nicht dargestellte Bremse eines zuzuordnenden Fahrzeugs. Ein solches Fahrzeug kann z.B. ein Nutzfahrzeug oder ein Schienenfahrzeug sein.

Die Anordnung 1 umfasst den Bremskrafterzeuger 2, eine Betätigungseinheit 3, einen Druckspeicher 4 und eine Bremsleitung 5a.

Der Bremskrafterzeuger 2 ist mit der nicht gezeigten Bremse gekoppelt und weist sowohl die Funktion einer Betriebsbremse als auch einer Park-/Feststellbremse auf. Der Bremskrafterzeuger 2 umfasst einen Bremszylinder 9 und eine Feststellsteuerung 10.

Der Bremszylinder 9 weist eine Kolbenstange 9a, einen Betriebsbremskolben 9b und eine Betriebsbremsdruckkammer 9c auf. Die Kolbenstange 9a ist mit der nicht gezeigten Bremse gekoppelt. In **Figur 2** ist der Betriebsbremskolben 9b mit der Kolbenstange 9a bei gelöster Bremse und bei zugespannter Bremse gezeigt. In der Position der zugespannten Bremse sind der Betriebsbremskolben 9b und die Kolbenstange 9a zur besseren Unterscheidung gepunktet dargestellt. Die Kolbenstange 9a ist hier bei zugespannter Bremse aus dem Bremszylinder 9 ausgefahren. Die Position des Betriebsbremskolbens 9b bei zugespannter Bremse wird im Weiteren als zugespannte Position des Betriebsbremskolbens 9b bezeichnet.

Die Bremsleitung 5a ist an einem nicht gezeigten, aber leicht vorstellbaren Anschluss des Bremszylinders 9 angeschlossen. Dieser Anschluss kommuniziert mit der Betriebsbremsdruckkammer 9c.

Die unten stehenden Ausführungsbeispiele sind beispielhaft zur Erläuterung und zum besseren Verständnis der Erfindung angegeben. Selbstverständlich können andere Ausführungen angepasst an die jeweiligen Funktionseinheiten realisiert werden.

Die Feststellsteuerung 10 ist am oder/und im Bremszylinder 9 angebracht/integriert. Dabei ist unter dem Begriff "am Bremszylinder 9" auch eine Anordnung an einem Fahrwerk, Rahmen oder/und Drehgestell eines zugeordneten Fahrzeugs zu verstehen.

Die Feststellsteuerung 10 kommuniziert mit der Bremsleitung 5a des Bremszylinders 9, d.h. die Feststellsteuerung 10 ist an diese einzige Bremsleitung 5a des Bremszylinders 9 direkt oder indirekt, z.B. über die Betriebsbremsdrucckammer 9c des Bremszylinders 9 oder an dem oben genannten Anschluss angeschlossen.

Die Feststellsteuerung 10 umfasst eine Selektionseinheit 11, eine Schalteinheit 12, eine Setzleitung 13, eine Rücksetzleitung 14, ein Stellelement 18 und eine Verriegelungseinheit 20. Die Selektionseinheit 11 steht mit ihrem Eingang über eine Eingangsleitung 5b mit der Bremsleitung 5a in Verbindung. Die Leitung 5b kann auch mit der Betriebsbremsdruckkammer 9c kommunizieren.

Die Selektionseinheit 11 ist mit der Schalteinheit 12 über die Setzleitung 13 und die Rücksetzleitung 14 verbunden.

Die Kolbenstange 9a steht in diesem Ausführungsbeispiel mit einer Verriegelungseinheit 20 in Wirkverbindung. Es ist auch möglich, dass nur der Betriebsbremskolben 9b, oder der Betriebsbremskolben 9b und die Kolbenstange 9a mit der Verriegelungseinheit 20 in Wirkverbindung stehen kann/können.

Unter der Wirkverbindung der Verriegelungseinheit 20 in Bezug auf die Kolbenstange 9a bzw. auf den Betriebsbremskolben 9b ist zu verstehen, dass die Verriegelungseinheit 20 in einer verriegelten Stellung die Kolbenstange 9a mit dem Betriebsbremskolben 9b relativ zu dem Bremszylinder 9 fixiert, wenn sich der Betriebsbremskolben 9b in der zugespannten Position befindet. In dieser Position ist die Bremse zugespannt. Durch die Verriegelung des Betriebsbremskolbens 9b bzw. der Kolbenstange 9a wird dieser Zustand der zugespannten Bremse in der Feststellfunktion beibehalten, auch wenn kein Bremsdruck mehr vorliegt.

Eine solche Fixierung kann z.B. durch einen Eingriff des Stellelementes 18 mit einem korrespondierenden Eingriffabschnitt der Kolbenstange 9a bzw. des Betriebsbremskolbens 9b realisiert werden.

Die Verriegelungseinheit 20 ist mit der Feststellsteuerung 10 über das Stellelement 18 gekoppelt und mittels der Feststellsteuerung 10 aus einer unverriegelten Stellung in die verriegelte Stellung und wieder zurück verstellbar ausgeführt. Wenn der Bremszylinder 9 in der Betriebsbremsfunktion betrieben wird, befindet sich die Verriegelungseinheit 20 in der unverriegelten Stellung. Die verriegelte Stellung der Verriegelungseinheit 20 kann hier nur eingestellt werden, wenn der Bremszylinder 9 zugespannt ist. In der verriegelten Stellung der Verriegelungseinheit 20 ist die Feststellbremsfunktion des Bremskrafterzeugers 2 aktiviert, wobei die Feststellbremsfunktion des Bremskrafterzeugers 2 in der unverriegelten Stellung der Verriegelungseinheit 20 deaktiviert ist. Dies wird unten noch im Detail erläutert.

Die Verriegelungseinheit 20 ist in Figur 2 nur schematisch dargestellt und kann selbstverständlich in unterschiedlichen Ausführungen gestaltet und angepasst sein.

Die Betätigungseinheit 3 weist eine nicht näher beschriebene Druckaufbereitung 5, einen Betriebsbremsbetätiger 6, z.B. ein Trittplatten-Bremsventil bzw. Drehhebelventil, und Feststellbremsbetätiger 7, 8, z.B. Drehhebelventil oder Tastenventile, auf und ist mit dem Druckspeicher 4 über eine Zuleitung 4a und mit dem Bremskrafterzeuger 2 über die Bremsleitung 5a verbunden.

Die Druckaufbereitung 5 ist in Figur 2 in üblicher Weise ausgebildet, was hier nicht beschrieben werden soll. In einer alternativen Ausführung ist die Druckaufbereitung 5 zur Bereitstellung von unterschiedlichen Druckwerten für die jeweiligen Betätiger 6, 7, 8 vorgesehen.

In der Figur 2 ist die Ausführung dargestellt, in welcher die Betätiger 6, 7, 8 in der Betätigungseinheit 3 jeweils mit ihren Eingängen mit der Zuleitung 4a gemeinsam über die Druckaufbereitung 5 verbunden sind. Die Ausgänge der Betätiger 6, 7, 8 sind untereinander und gemeinsam mit der Bremsleitung 5a verbunden. Die Bremsleitung 5a ist an die Betriebsbremsdruckkammer 9c des Bremszylinders 9 angeschlossen.

Mit dem Betriebsbremsbetätiger 6 wird die Bremsleitung 5a und somit die Betriebsbremsdruckkammer 9c des Bremszylinders 9 für ein Zuspannen der Bremse mit Druckluft aus dem Druckspeicher 4 beaufschlagt. Die Druckluft zum Zuspannen der Bremse für den Bremszylinder 9 liefert einen Bremsdruck, der in einem Bereich von einem Anfangsdruck P0 (Null Bar) bis zu einem maximalen Bremsdruck PB liegt und veränderlich von dem Betriebsbremsbetätiger 6 in die Bremsleitung 5a eingeleitet werden kann. Dabei wird durch den Betriebsbremskolben 9b Bremskraft auf die zugehörige Bremse aufgebracht und entsprechend dem veränderlichen Bremsdruck durch Druckaufbau oder Druckabbau erhöht oder verringert.

Der erste Feststellbremsbetätiger 7 dient zum Feststellen bzw. Aktivieren der Feststellbremsfunktion des Bremskrafterzeugers 2, d.h. der Park-/Feststellbremse, wobei die Feststellsteuerung 10 die Verriegelungseinheit 20 aus der unverriegelten Stellung in die verriegelte Stellung verstellt. Dieser Vorgang wird im Weiteren als "Setzen" der Feststellbremse bezeichnet und unten noch ausführlich beschrieben.

Der erste Feststellbremsbetätiger 7 beaufschlagt die Bremsleitung 5a zum Setzen der Feststellbremse mit einem Setzdruck P1, der größer als der maximale Bremsdruck PB ist.

Mit dem zweiten Feststellbremsbetätiger 8 wird die Feststellsteuerung 10 die Verriegelungseinheit 20 aus der verriegelten Stellung in die unverriegelte Stellung zurück verstellt. Mit anderen Worten, die Feststellbremsfunktion wird deaktiviert. Dieser Vorgang wird im Weiteren als "Rücksetzen" der Feststellbremse bezeichnet und unten ebenfalls detailliert erläutert.

Der zweite Feststellbremsbetätiger 8 beaufschlagt die Bremsleitung 5a zum Rücksetzen der Feststellbremse mit einem Rücksetzdruck P2, der größer als der Setzdruck P1 und größer als der maximale Bremsdruck PB ist.

Die Erzeugung der verschiedenen Druckwerte P0 bis PB, P1 und P2 kann hier dadurch erfolgen, dass die jeweiligen Ventile der Betätiger 6, 7, 8 den Ausgangsdruck des Druckspeichers 4 jeweils auf den zugeordneten Druck/Druckbereich reduzieren. Mit anderen Worten, die jeweiligen Ventile 6, 7. 8 weisen Druckreduzierkomponenten auf. Es ist alternativ auch wie oben schon erwähnt möglich, dass die Druckaufbereitung 5 den jeweiligen Druck/Druckbereich für den zugehörigen Betätiger 6, 7, 8 aufbereitet und bereitstellt.

Auf diese Weise wird die Bremsleitung 5a nicht nur mit dem Bremsdruck im Bereich von P0-PB für die Betriebsbremsfunktion, sondern auch mit den anderen Druckwerten, d.h. mit dem Setzdruck P1 und dem Rücksetzdruck P2, für die Feststellbremsfunktion beaufschlagt. Da die Eingangsleitung 5b mit der Bremsleitung 5a bzw. mit der Betriebsbremsdruckkammer 9c des Bremszylinders 9 kommuniziert, wird somit auch die Eingangsleitung 5b und die daran angeschlossene Feststellsteuerung 10 mit den Druckwerten P0-PB, P1 und P2 beaufschlagt.

Zusätzliche Druckleitungen ausgehend von der Betätigungseinheit 3 zur Steuerung der Feststellbremse bzw. der Feststellsteuerung 10 sind daher nicht erforderlich.

Die Feststellsteuerung 10 ist so ausgebildet, dass sie die verschiedenen Druckwerte P0-PB, P1 und P2 unterscheiden und sowohl den Setzdruck P1 als auch den Rücksetzdruck P2 für die Steuerung der Feststellbremsfunktion erkennen kann, wenn die Bremsleitung 5a mit diesen beaufschlagt wird.

Zu diesem Zweck ist die Feststellsteuerung 10 mit der Selektionseinheit 11 versehen, welche die Druckwerte P1 und P2 der Eingangsleitung 5b, d.h. der Bremsleitung 5a, jeweils erkennt. In Abhängigkeit von dem erkannten Setzdruck P1 bzw. Rücksetzdruck P2 steuert die Selektionseinheit 11 die Schalteinheit 12 in entsprechender Weise über die Setzleitung 13 und Rücksetzleitung 14 derart, dass die Schalteinheit 12 mittels des Stellelementes 18 die Verriegelungseinheit 20 verriegelt oder entriegelt.

Die Schalteinheit 12 der Feststellsteuerung 10 ist in allgemeiner Weise ein binärer Speicher bzw. ein bistabile Kippstufe mit zwei stabilen Zuständen Q_{R}, Q_{S} und zwei Eingängen R, S. Dies wird auch als ein so genanntes RS-Flipflop bezeichnet. Der erste Eingang dient als Rücksetzeingang R und der zweite Eingang als Setzeingang S. Der Setzeingang S wird durch den Setzdruck P1 aktiviert, wobei der Rücksetzeingang R durch den Rücksetzdruck P2 aktiviert wird. Der erste stabile Zustand Q_{R} ist der unverriegelten Stellung der Verriegelungseinheit 20 zugeordnet, und der zweite stabile Zustand Qs ist der verriegelten Stellung der Verriegelungseinheit 20 zugeordnet.

Eine bistabile Kippstufe mit zwei stabilen Zuständen ist erforderlich, da nach dem Setzen mit dem Setzdruck P1 zum Erreichen der verriegelten Stellung der Feststellsteuerung 10 diese verriegelte Stellung auch nach Abbau des Setzdrucks P1, d.h. auch bei nicht mehr vorhandenem Druck in der Bremsleitung 5a, beibehalten werden muss, um die Park-/Feststellbremsfunktion aufrecht zu erhalten. Diese verriegelte Stellung kann nur durch Beaufschlagung mit dem Rücksetzdruck P2 in die unverriegelte Stellung zurückgesetzt werden. Auch die unverriegelte Stellung muss dann beibehalten werden, wenn der Rücksetzdruck P2 nicht mehr vorhanden ist. Mit anderen Worten, nach dem Setzen der Feststellsteuerung 10 in die verriegelte Stellung muss die verriegelte Stellung in einer Art Selbsthaltung verbleiben, wie auch nach dem Rücksetzen der Feststellsteuerung 10 in die unverriegelte Stellung diese unverriegelte Stellung ebenfalls eine Selbsthaltung aufweisen muss.

Die Selektionseinheit 11 ist in Figur 2 beispielhaft mit einem Setzventil 21 und einem Rücksetzventil 24 versehen. Ein Eingang des Setzventils 21 ist über eine Leitung 5c mit der Eingangsleitung 5b verbunden, wobei ein Eingang des Rücksetzventils 24 über eine Leitung 5d mit der Eingangsleitung 5b verbunden ist. Das Setzventil 21 weist einen Druckselektor 22 mit einer Selektorleitung 23, die an der Leitung 5c angeschlossen ist, auf. In ähnlicher Weise ist das Rücksetzventil 24 mit einem Druckselektor 25 und einer Selektorleitung 26, die an der Leitung 5d angeschlossen ist, versehen. Jeder Druckselektor 22, 25 weist einen druckabhängigen Betätiger auf, der das zugehörige Ventil 21, 24 öffnet, wenn der Druck in der Selektorleitung 23, 26 einen vorher einstellbaren Wert überschreitet. So öffnet der Druckselektor 22 das Setzventil 21, wenn der Druck in der Selektorleitung 23, d.h. in der Eingangsleitung 5b und somit in der Bremsleitung 5a, den Setzdruck P1 überschreitet. Und in ähnlicher Weise öffnet der Druckselektor 25 das Setzventil 24, wenn der Druck in der Selektorleitung 26, d.h. in der Eingangsleitung 5b und somit in der Bremsleitung 5a, den Rücksetzdruck P2 überschreitet. Die Ventile 21, 24 können z.B. als druckabhängige Ventile ausgebildet sein.

Der Ausgang des Setzventils 21 ist mit der Setzleitung 13 an einem Setzabschnitt 15 der Schalteinheit 12 angeschlossen. Und der Ausgang des Rücksetzventils 24 ist mit der Rücksetzleitung 14 an einem Rücksetzabschnitt 16 der Schalteinheit 12 angeschlossen.

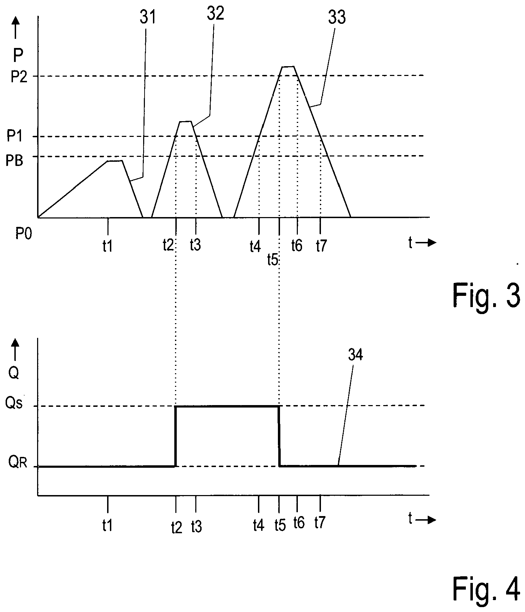

Das Stellelement 18 ist einem Ausgang des Setzabschnitts 15 zugeordnet und weist den Zustand Q (Q_{R} oder Qs) auf. Außerdem ist der Ausgang des Setzabschnitts 15 der Schalteinheit 12 über eine Rückkopplungsleitung 17 mit dem Druckselektor 22 des Setzventils 21 verbunden. Die Rückkopplungsleitung 17 kann pneumatisch oder/und mechanisch ausgebildet sein. Sie dient dazu, dass das Setzventil 21 nicht öffnet, wenn der zweite stabile (gesetzte) Zustand Qs der verriegelten Stellung der Verriegelungseinheit 20 eingestellt ist. Dies ist erforderlich, da beim Druckabbau ausgehend von dem Rücksetzdruck P2 der niedrigere Setzdruck P1 wieder durchlaufen wird und dann der Druckselektor 22 des Setzventils 21 das Setzventil 21 öffnen könnte. Dies wird im Zusammenhang mit den Figuren 3 und 4 näher beschrieben.

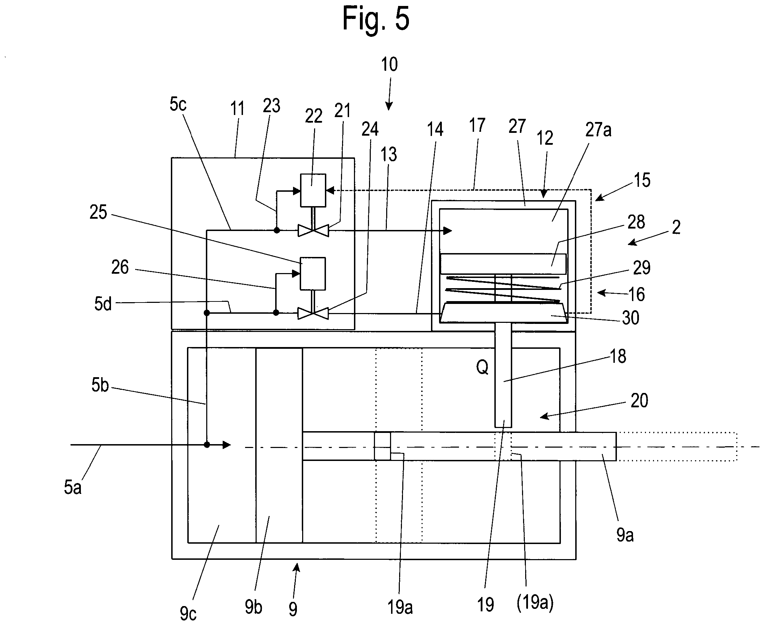

Eine Selbsthaltung des gesetzten Zustands Qs kann z.B. mechanisch durch einen Klinkenmechanismus ausgeführt werden, der mit dem Stellelement 18 zusammenwirkt. Der rückgesetzte Zustand Q_{R} kann z.B. ein Kraftspeicherelement als Selbsthaltung aufweisen. Dies wird unten noch im Zusammenhang mit einem Ausführungsbeispiel der Figur 5 beispielhaft erläutert.

**Figur 3** und **Figur 4** zeigen schematische Darstellungen verschiedener Druckverläufe im Zusammenhang mit einem Zustand einer Verriegelungseinrichtung.

Figur 3 zeigt einen Druckverlauf eines Bremsvorgangs 31, einen Druckverlauf eines Setzvorgangs 32 und einen Druckverlauf eines Rücksetzvorgangs 33 über der Zeit t. Dazu zeigt Figur 4 einen Verriegelungszustand 34 der Verriegelungsvorrichtung 20 der Feststellbremse im Zusammenhang mit den verschiedenen Druckverläufen 31, 32, 33 der Figur 3.

Als Randbedingung gilt zunächst, dass die Feststellbremsfunktion des Bremskrafterzeugers 2 in der unverriegelten Stellung der Verriegelungseinheit 20 deaktiviert ist. Das bedeutet, dass sich die Verriegelungseinheit 20 und somit die Schalteinheit 12 der Feststellsteuerung im rückgesetzten Zustand Q_{R} bzw. Ruhezustand befinden.

Die Bremsfunktion wird durch Beaufschlagung der Bremsleitung 5a und somit der Betriebsbremsdruckkammer 9c und des Betriebsbremskolbens 9b mit Bremsdruck bzw. Bremszylinderdruck in dem Bereich P0 bis PB erzielt. Solange der Bremsdruck den Setzdruck P1 nicht überschreitet, wird durch den Betriebsbremskolben 9b Bremskraft auf die Bremse aufgebracht und diese zugespannt. Die Bremskraft erhöht sich bzw. verringert sich beim Zuspannen entsprechend dem Druckaufbau bzw. Druckabbau beim Bremsvorgang 31 im Druckbereich P0 bis PB.

Der Bremsvorgang 31 wird durch Betätigung des Betriebsbremsbetätigers 6 eingeleitet, beginnt hier im Nullpunkt bei P0 und steigt an, bis er im Zeitpunkt t1 unterhalb des maximalen Bremsdrucks PB verbleibt und dann wieder abfällt. Da hierbei der Setzdruck P1 weder erreicht noch überschritten wird, erfolgt weder eine Betätigung des Setzventils 21 durch dessen Druckselektor 22 noch eine Betätigung des Rücksetzventils 24 durch dessen Druckselektor 25. Während des Bremsvorgangs 31 wird daher die Feststellfunktion nicht aktiviert.

Der maximale Bremsdruck PB und der Setzdruck P1 sind hier durch einen Sicherheitsabstand voneinander so getrennt, dass der maximale Bremsdruck PB bei Bremsvorgängen 31 niemals eine Aktivierung der Feststellsteuerung 10 für eine Feststellfunktion auslösen kann. Dies kann z.B. dadurch realisiert sein, dass der Betriebsbremsbetätiger 6 in seiner Endstellung nur den maximalen Bremsdruck PB liefert, wobei der Druckselektor 22 des Setzventils 21 einen Setzdruck P1 aufweist, der größer als PB ist, z.B. P1>(PB+Sicherheit).

Der Setzvorgang 32 wird durch den ersten Feststellbremsbetätiger 7 ausgelöst. Dabei wird der Druck in der Bremsleitung 5a über den Setzdruck P1 erhöht, wobei der Betriebsbremskolben 9b des Bremszylinders 9 in die zugespannte Position verfahren wird, da der Druckbereich von P0 bis PB durchlaufen und darüber hinaus im Zeitpunkt t2 der Setzdruck P1 überschritten wird.

Gleichzeitig erkennt der Druckselektor 22 des Setzventils 21, dass der Setzdruck P1 überschritten wird und öffnet das Setzventil 21. Das Setzventil 21 leitet dann Druckluft aus der Bremsleitung 5a, der Eingangsleitung 5b und der Leitung 5c über die Setzleitung 13 in den Setzeingang S des Setzabschnitts 15 der Schalteinheit 12. Die Schalteinheit 12 wird dadurch aus ihrem rückgesetzten Zustand Q_{R} bzw. Ruhezustand in ihren gesetzten Zustand Qs verstellt. Dabei wird über das Stellelement 18 die Verriegelungseinheit 20 aus ihrer unverriegelten Stellung in ihre verriegelte Stellung verstellt.

Bei Abbau des Drucks wird nun im Zeitpunkt t3 der Setzdruck P1 unterschritten. Der gesetzte Zustand Qs des Verriegelungszustands 34 der Verriegelungseinheit 20 wird beibehalten, da der Betriebsbremskolben 9b bei weiterem Druckabbau bis auf P0 in seiner zugespannten Position aufgrund der verriegelten Stellung der Verriegelungseinheit 20 gehalten wird. Auf diese Weise ist und bleibt die Feststellbremsfunktion aktiv. Die Bremskraft der zugespannten Bremse bleibt unabhängig vom Vorhandensein des Bremszylinderdrucks zeitlich unbegrenzt erhalten. Dabei kann der Bremszylinderdruck Werte von P0 bis zum Setzdruck P1 (bei t2 oder/und t3) annehmen, ohne dass die zugespannte Bremse in der Feststellbremsfunktion gelöst wird.

Auch ein Defekt der Bremsleitung 5a, z.B. Zerreißen, mit vollständigem Druckverlust kann zu keiner Fehlfunktion der aktivierten Park-/Feststellbremsfunktion führen.

Der Rücksetzvorgang 33 wird durch den zweiten Feststellbremsbetätiger 8 ausgelöst. Dabei wird der Druck in der Bremsleitung 5a über den Setzdruck P1 und darüber hinaus über den Rücksetzdruck P2 erhöht, wobei auch hier beim Durchlaufen des Druckbereichs von P0 bis PB der Betriebsbremskolben 9b des Bremszylinders 9 in der zuvor durch den Setzvorgang zugespannten Position verbleibt.

Wenn nun beim Druckaufbau der Setzdruck P1 im Zeitpunkt t4 überschritten wird, erfolgt kein erneuter Setzvorgang, da der Druckselektor 22 durch die Rückkopplungsleitung 17 beim zuvor erfolgten Setzvorgang 32 blockiert bzw. deaktiviert wurde. Diese Blockierung wird erst wieder außer Kraft gesetzt, wenn beim Druckabbau der Setzdruck P1 im Zeitpunkt t7 unterschritten worden ist.

Bei weiterer Druckerhöhung erkennt dann der Druckselektor 25 des Rücksetzventils 24, wenn der Rücksetzdruck P2 im Zeitpunkt t5 überschritten wird, und öffnet danach das Rücksetzventil 24. Das Rücksetzventil 24 leitet dann Druckluft aus der Bremsleitung 5a, der Eingangsleitung 5b und der Leitung 5d über die Rücksetzleitung 14 in den Rücksetzeingang R des Rücksetzabschnitts 16 der Schalteinheit 12. Der Verriegelungszustand 34, d.h. die Schalteinheit 12, wird dadurch aus dem gesetzten Zustand Qs in den rückgesetzten Zustand Q_{R} verstellt. Dabei wird über das Stellelement 18 die Verriegelungseinheit 20 aus ihrer verriegelten Stellung in ihre unverriegelte Stellung zurück verstellt. Gleichzeitig wird auch die Rückkopplungsleitung 17 deaktiviert, wobei die Blockierung des Druckselektors 22 des Setzventils 21 erst durch Unterschreiten des Setzdrucks P1 gelöst wird. Dies kann z.B. dadurch erzielt werden, das Druck in der Leitung 5c zur Selbsthaltung der Blockierung des Druckselektors 22 des Setzventils 21 genutzt wird, solange er den Setzdruck P1 noch nicht unterschritten hat. Eine entsprechende Anpassung des Druckselektors 22 ist dazu erforderlich.

Bei Abbau des Drucks wird zunächst im Zeitpunkt t6 der Rücksetzdruck P2 unterschritten. Da sich die Verriegelungseinheit 20 schon im rückgesetzten Zustand Q_{R} befindet, erfolgt keine weitere Rücksetzung.

Der Druck wird weiter verringert und unterschreitet dann im Zeitpunkt t7 den Setzdruck P1. Die Blockierung des Druckselektors 22 des Setzventils 21 wird nach Unterschreiten des Setzdrucks P1 wieder gelöst. Es kann auch der maximale Bremsdruck PB als Schwellwert zur Aufhebung der Blockierung genutzt werden.

Eine weitere Verringerung des Drucks bis auf P0 beendet den Rücksetzvorgang. Der rückgesetzte Zustand Q_{R} des Verriegelungszustands 34 der Verriegelungseinheit 20 wird danach bis zu einem neuen Setzvorgang 32 beibehalten.

Ein erneuter Setzvorgang kann jedoch schon sofort nach Freigabe der Blockierung des Druckselektors 22 des Setzventils 21 wieder eingeleitet werden, falls dies in einem Notfall erforderlich werden könnte. Wenn z.B. nach Rückstellen der Feststellbremse bei Zurückbewegung des Betriebsbremskolbens 5b ein sofortiger Bremsvorgang 31 notwendig werden sollte, kann dieser ebenfalls sofort durch den Betriebsbremsbetätiger 6 oder/und als Setzvorgang 32 durch den Feststellbremsbetätiger 7 erfolgen.

In **Figur 5** ist eine schematische Teilschnittdarstellung eines Ausführungsbeispiels eines erfindungsgemäßen Bremskrafterzeugers 2 der Anordnung 1 nach Figur 1 und 2 dargestellt.

Der Bremszylinder 9 ist bereits oben beschrieben. Die Feststellsteuerung 10 ist am oder/und im Bremszylinder 9 angebracht/integriert und weist die ebenfalls oben beschriebene Selektionseinheit 11 auf.

Die Schalteinheit 12 ist hier schematisch als ein mögliches Ausführungsbeispiel in Form eines Stellzylinders 27 detaillierter angegeben.

Der Stellzylinder 27 ist mit seiner Mittelachse in einem rechten Winkel (radial) zu einer Mittelachse des Bremszylinders 9 angeordnet. Natürlich kann auch ein anderer Winkel möglich sein.

Dieser Stellzylinder 27 umfasst eine Stelldruckkammer 27a, einen Stellkolben 28 mit einer Kolbenstange, die hier das Stellelement 18 bildet, ein Kraftspeicherelement 29 und eine Sperreinheit 30.

Der Stellzylinder 27 ist in Figur 5 mit dem Stellkolben 28 in dem rückgesetzten Zustand Q_{R} gezeigt. Das Kraftspeicherelement 29 ist hier als Druckfeder ausgebildet, die sich mit einem Ende an dem Stellkolben 28 und mit dem anderen Ende auf der Sperreinheit 30 abstützt. Das Kraftspeicherelement 29 ist in dem in Figur 5 gezeigten rückgesetzten Zustand Q_{R} entspannt. Es ist auch möglich, dass der Stellkolben 28 an einem Anschlag anliegt, gegen den er durch das Kraftspeicherelement 29 gedrückt wird. Die Sperreinheit 30 ist an dem Ende des Stellzylinders 27 angeordnet, welches am Bremszylinder 9 angebracht ist.

Das Stellelement 18, erstreckt sich durch die Sperreinheit 30 in den Bremszylinder 9 auf der Seite des Betriebsbremskolbens 9b hinein, auf welcher die Kolbenstange 9a an dem Betriebsbremskolben 9b angebracht ist. An dem in dem Bremszylinder 9 befindlichen freien Ende des Stellelementes 18 ist ein Verriegelungsabschnitt 19 angeordnet, der mit einem Verriegelungsabschnitt 19a der Kolbenstange 9a des Bremszylinders 9 korrespondiert. In der zugespannten Position des Betriebsbremskolbens 9b, die gestrichelt dargestellt ist, befinden sich die Verriegelungsabschnitte 19, 19a untereinander, und bilden so die Verriegelungseinheit 20. Ein Eingriff des Verriegelungsabschnitts 19 des Stellelementes 18 und des Verriegelungsabschnitts 19a der Kolbenstange 9a ist in dieser Stellung möglich und bildet dann die verriegelte Stellung der Verriegelungseinheit 20 für die Feststellbremsfunktion.

Die Stelldruckkammer 27a des Stellzylinders 27 ist als Setzeinheit 15 mit dem Setzventil 21 über die Setzleitung 13 verbunden. Die Sperreinheit 30 des Stellzylinders 27 als Rücksetzeinheit 16 ist mit dem Rücksetzventil 24 über die Rücksetzleitung 14 verbunden. Die Rückkopplungsleitung 17 ist sowohl an der Sperreinheit 30 als auch an dem Druckselektor 22 des Setzventils 21 angeschlossen.

Bei dem Setzvorgang 32 wird zunächst der Betriebsbremskolben 9 wie oben beschrieben in die zugespannte Stellung verfahren. Dann wird der Setzdruck 21 durch das mittels Druckselektor 22 geöffnete Stellventil 21 über die Setzleitung 13 in die Stelldruckkammer 27a des Stellzylinders 27 geleitet und verstellt den Stellkolben 28 gegen die Rückstellkraft des Kraftspeicherelementes 29 in Richtung auf die Sperreinheit 30 aus dem rückgesetzten Zustand Q_{R} in den gesetzten Zustand Qs. Die Sperreinheit 30 und das Sperrelement 18 stehen derart in einem Wirkzusammenhang, dass die Sperreinheit 30 das Sperrelement 18 in dem gesetzten Zustand Qs arretiert, z.B. mittels eines Klinkenmechanismus. Damit wird eine Selbsthaltung des Stellzylinders 27 und somit des gesetzten Zustands Qs gebildet. Dieser Klinkenmechanismus steht mit der Rückkopplungsleitung 17, die z.B. mechanisch ausgebildet sein kann, in Zusammenwirkung und blockiert den Druckselektor 22 des Setzventils 21.

In dem gesetzten Zustand Qs steht das Stellelement 18 mit seinem Verriegelungsabschnitt 19 mit dem Verriegelungsabschnitt 19a der Kolbenstange 9a des Bremszylinders 9 in Eingriff und verriegelt diesen in der zugespannten Stellung der Bremse, wobei die Park-/Feststellbremsfunktion gebildet ist.

Bei Druckabbau bleibt die Kolbenstange 9a des Bremszylinders 9 durch den Eingriff mit dem Stellelement 18 verriegelt, wobei das Stellelement 18 durch die Sperreinheit 30 des Stellzylinders 27 verriegelt in der gesetzten Stellung Qs verbleibt.

Bei dem Rücksetzvorgang 33 wird der Rücksetzdruck P2 durch das mittels des Druckselektors 25 geöffnete Rücksetzventil 24 über die Rücksetzleitung 14 in einen Entriegelungsmechanismus der Sperreinheit 30 geleitet. Der Stellkolben 28 wird dann mittels der Rückstellkraft des Kraftspeicherelementes 29 in seine Ausgangsstellung in den rückgesetzten Zustand Q_{R} zurückgefahren, wobei das Stellelement 18 mit seinem Verriegelungsabschnitt 19 außer Eingriff mit dem Verriegelungsabschnitt 19a der Kolbenstange 9a des Bremszylinders 9 kommt. Damit ist die Verriegelungseinheit 20 wieder in dem unverriegelten Zustand.

Der Rücksetzdruck P2 bewirkt in der Sperreinheit 30 außerdem, dass zum Einen das Setzventil 21 über die Rückkopplungsleitung 17 eine Entlüftung der Stelldruckkammer 27a des Stellzylinders 27 bewirkt, wobei der Stelldruck P1 keinen Einfluss wie oben beschrieben auf das Setzventil 21 ausübt. Erst wenn der Rücksetzdruck P2 unter den Setzdruck P1 abgefallen ist, werden die Blockierung des Druckselektors 22 des Setzventils 21 und dessen Entlüftungsfunktion der Stelldruckkammer 27a des Stellzylinders 27 aufgehoben. Selbstverständlich sind auch andere Anordnung und Ausführungen denkbar.

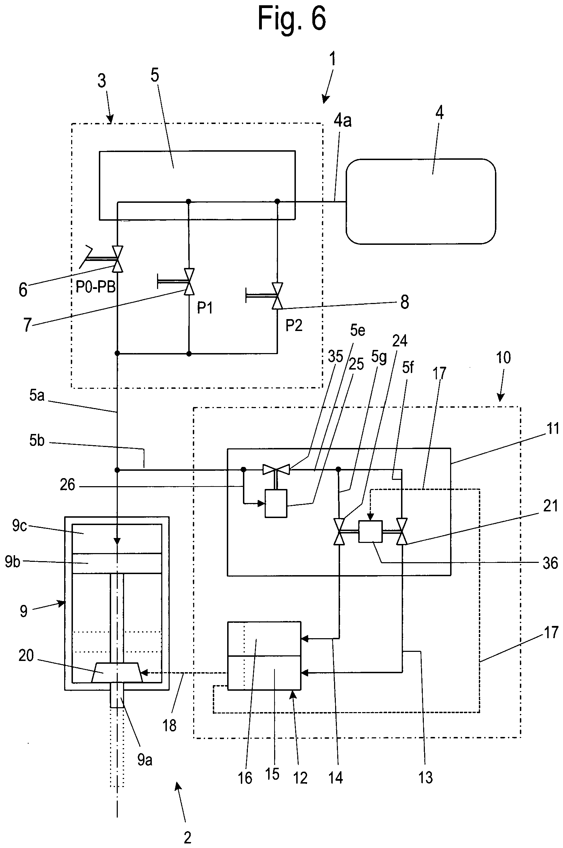

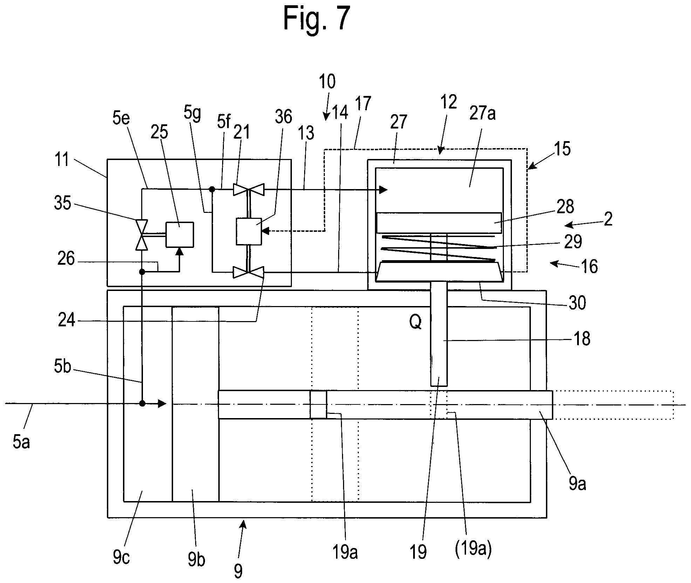

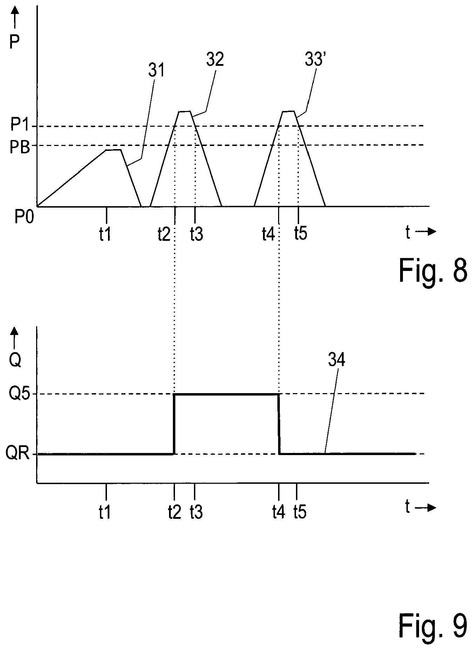

In **Figur 6** ist ein schematisches Blockschaltbild eines zweiten Ausführungsbeispiels einer erfindungsgemäßen Anordnung 1 eines Bremskrafterzeugers 2. **Figur 7** zeigt eine schematische Teilschnittdarstellung eines zweiten Ausführungsbeispiels eines erfindungsgemäßen Bremskrafterzeugers 2 der Anordnung nach Figur 6. Die **Figuren 8 und 9** stellen ähnlich den Figuren 3 und 4 schematische Darstellungen verschiedener Druckverläufe im Zusammenhang mit einem Zustand der Verriegelungseinrichtung 20 des zweiten Ausführungsbeispiels nach Figur 5 und 6 dar.

Im Unterschied zu dem ersten Ausführungsbeispiel wird hier der Setzdruck P1 sowohl zum Setzen als auch zum Rücksetzen der Feststellbremsfunktion verwendet. Ein gesonderter Rücksetzdruck P2 ist nicht erforderlich. Dazu ist die Feststellsteuerung 10 hier so ausgebildet, dass sie die verschiedenen Druckwerte P0-PB und P1 unterscheiden kann. Weiterhin ist die Feststellsteuerung 10 so ausgebildet, dass beim ersten Mal des Auftretens des Setzdrucks P1 die Feststellbremsfunktion gesetzt wird und beim zweiten Mal des Auftretens des Setzdrucks P1 die Feststellbremsfunktion rückgesetzt wird.

Auch im zweiten Ausführungsbeispiel ist die Feststellsteuerung 10 mit einer Selektionseinheit 11 versehen, welche das erste und zweite Auftreten des Druckwertes P1 in der Eingangsleitung 5b, d.h. der Bremsleitung 5a, jeweils erkennt. In Abhängigkeit von dem ersten und zweiten erkannten Auftreten des Setzdrucks P1 steuert die Selektionseinheit 11 die Schalteinheit 12 in entsprechender Weise über die Setzleitung 13 und Rücksetzleitung 14 derart, dass die Schalteinheit 12 mittels des Stellelementes 18 die Verriegelungseinheit 20 verriegelt oder entriegelt.

Die Selektionseinheit 11 und die Schalteinheit 12 der Feststellsteuerung 10 bilden zusammen den binären Speicher bzw. die bistabile Kippstufe mit zwei stabilen Zuständen Q_{R}, Qs, wobei diese bistabile Kippstufe nur einen einzigen Eingang, nämlich die Leitung 5b, aufweist. Auf diese Weise ist ein so genanntes T-Flipflop gebildet. Die Eingänge der Schalteinheit 12 werden durch die Selektionseinheit 11 wie im ersten Ausführungsbeispiel angesteuert. Der Aufbau der Selektionseinheit 11 des zweiten Ausführungsbeispiels wird dazu im Folgenden erläutert.

Die Funktion der als T-Flipflop ausgebildeten bistabilen Kippstufe besteht darin, dass ein erstes Auftreten des Setzdrucks P1 an dem gemeinsamen Eingang (hier: Leitung 5b) ein Setzen bewirkt, wobei ein zweites Auftreten des Setzdrucks P1 an demselben gemeinsamen Eingang ein Rücksetzen bewirkt.

Die Selektionseinheit 11 ist in Figur 6 im Unterschied zu der Selektionseinheit 11 nach Figur 2 beispielhaft mit einem Steuerventil 35, einem Setzventil 21 und einem Rücksetzventil 24 versehen. Ein Eingang des Steuerventils 35 ist über die Leitung 5b direkt mit der Bremsleitung 5a verbunden. Der Eingang des Steuerventils 35 ist der gemeinsame Eingang des T-Flipflops. Das Steuerventil 35 ist mit einem Druckselektor 25 gekoppelt. Der Druckselektor 25 ist über eine Selektorleitung 26 mit dem Eingang des Steuerventils 35 bzw. mit der Leitung 5b verbunden. Der Druckselektor 25 weist einen druckabhängigen Betätiger auf, der das Steuerventil 35 öffnet, wenn der Druck in der Leitung 5b bzw. in der Bremsleitung 5a den Setzdruck P1 überschreitet. Das Steuerventil 35 kann auch als druckabhängiges Ventil ausgebildet sein.

Im Unterschied zum ersten Ausführungsbeispiel ist ein Eingang des Setzventils 21 ist über eine Leitung 5f mit einer Ausgangsleitung 5e des Steuerventils 35 verbunden, wobei ein Eingang des Rücksetzventils 24 über eine Leitung 5g mit der Ausgangsleitung 5e des Steuerventils 35 verbunden ist.

Ein weiterer Unterschied zum ersten Ausführungsbeispiel besteht darin, dass die Ventile 21 und 24 keinen jeweiligen Druckselektor aufweisen, sondern mit einer gemeinsamen Umschalteinheit 36 gekoppelt sind. Die Umschalteinheit 36 ist mit der Rückkopplungsleitung 17 verbunden. Die Ventile 21 und 24 sind hier keine druckabhängigen Ventile.

Der Ausgang des Setzventils 21 ist auch im zweiten Ausführungsbeispiel mit der Setzleitung 13 an dem Setzabschnitt 15 der Schalteinheit 12 angeschlossen. Und der Ausgang des Rücksetzventils 24 ist auch hier mit der Rücksetzleitung 14 an dem Rücksetzabschnitt 16 der Schalteinheit 12 angeschlossen.

Figur 7 zeigt eine schematische Teilschnittdarstellung eines zweiten Ausführungsbeispiels eines erfindungsgemäßen Bremskrafterzeugers 2 der Anordnung nach Figur 6 ähnlich wie Figur 5, jedoch mit der Ausführung der Selektionseinheit 11 wie im Zusammenhang mit Figur 6 oben erläutert.

Figur 8 zeigt einen Druckverlauf eines Bremsvorgangs 31, einen Druckverlauf eines Setzvorgangs 32 und einen Druckverlauf eines Rücksetzvorgangs 33' über der Zeit t. Dazu zeigt Figur 9 einen Verriegelungszustand 34 der Verriegelungsvorrichtung 20 der Feststellbremse im Zusammenhang mit den verschiedenen Druckverläufen 31, 32, 33' der Figur 8. Die Erläuterung zu Figur 8 entspricht der Figur 4 und wird hier nicht wiederholt.

Der Bremsvorgang 31 ist bereits im Zusammenhang mit Figur 3 beschrieben.

Als Randbedingung für einen Setzvorgang 32 gilt, dass das Setzventil 21 durch die Umschalteinheit 36 geöffnet und das Rücksetzventil 24 durch die Umschalteinheit 36 geschlossen ist. Dies ist normalerweise nach einem Rücksetzvorgang der Feststellsteuerung 10 der Fall.

Der Setzvorgang 32 wird durch den ersten Feststellbremsbetätiger 7 ausgelöst. Dabei wird der Druck in der Bremsleitung 5a über den Setzdruck P1 erhöht, wobei der Betriebsbremskolben 9b des Bremszylinders 9 in die zugespannte Position verfahren wird, da der Druckbereich von P0 bis PB durchlaufen und darüber hinaus im Zeitpunkt t2 der Setzdruck P1 überschritten wird.

Im Gegensatz zu dem ersten Ausführungsbeispiel erkennt nun gleichzeitig der Druckselektor 25 des Steuerventils 35, dass der Setzdruck P1 überschritten wird und öffnet das Steuerventil 35. Da das Setzventil 21 durch die Umschalteinheit 36 geöffnet ist, leitet es Druckluft aus der Bremsleitung 5a, der Eingangsleitung 5b, der Leitung 5e und der Leitung 5f über die Setzleitung 13 in den Setzeingang S des Setzabschnitts 15 der Schalteinheit 12. Die Schalteinheit 12 wird dadurch aus ihrem rückgesetzten Zustand Q_{R} bzw. Ruhezustand in ihren gesetzten Zustand Qs verstellt. Dabei wird über das Stellelement 18 die Verriegelungseinheit 20 aus ihrer unverriegelten Stellung in ihre verriegelte Stellung verstellt, in welcher die Verriegelungseinheit 20 wie oben beschrieben gehalten wird. Durch die Rückkopplungsleitung 17 wird die Umschalteinheit 36 derart umgeschaltet, dass nun das Setzventil 21 geschlossen ist und das Rücksetzventil 24 geöffnet ist.

Bei Abbau des Drucks wird im Zeitpunkt t3 der Setzdruck P1 unterschritten. Der gesetzte Zustand Qs des Verriegelungszustands 34 der Verriegelungseinheit 20 wird wie oben beschrieben beibehalten.

Der Rücksetzvorgang 33' wird durch den zweiten Feststellbremsbetätiger 8 ausgelöst. Dabei wird der Druck in der Bremsleitung 5a im Gegensatz zu dem ersten Ausführungsbeispiel wieder auf den Setzdruck P1 erhöht, wobei auch hier beim Durchlaufen des Druckbereichs von P0 bis PB der Betriebsbremskolben 9b des Bremszylinders 9 in der zuvor durch den Setzvorgang zugespannten Position verbleibt.

Bei diesem Druckaufbau wird der Setzdruck P1 im Zeitpunkt t4 überschritten. Der Druckselektor 25 des Steuerventils 35 erkennt dies und öffnet das Steuerventil 35. Es erfolgt kein erneuter Setzvorgang, da das Setzventil 21 durch die Umschalteinheit 36 geschlossen ist. Aber es erfolgt ein Rücksetzvorgang, da das Rücksetzventil 24 geöffnet ist.

Das Rücksetzventil 24 leitet dann Druckluft aus der Bremsleitung 5a, der Eingangsleitung 5b, der Leitung 5e und der Leitung 5g über die Rücksetzleitung 14 in den Rücksetzeingang R des Rücksetzabschnitts 16 der Schalteinheit 12. Der Verriegelungszustand 34, d.h. die Schalteinheit 12, wird dadurch aus dem gesetzten Zustand Qs in den rückgesetzten Zustand Q_{R} verstellt. Dabei wird über das Stellelement 18 die Verriegelungseinheit 20 aus ihrer verriegelten Stellung in ihre unverriegelte Stellung zurück verstellt, wenn der rückgesetzte Zustand Q_{R} erreicht ist. Dann wird über die Rückkopplungsleitung 17 die Umschalteinheit 36 wieder umgeschaltet, wodurch das Rücksetzventil 24 geschlossen wird und das Setzventil 21 wieder geöffnet wird.

Bei Abbau des Drucks wird zunächst im Zeitpunkt t5 der Setzdruck P1 unterschritten. Da sich die Verriegelungseinheit 20 schon im rückgesetzten Zustand Q_{R} befindet, erfolgt keine weitere Rücksetzung. Hierbei könnte z.B. die Umschalteinheit 36 auch wieder umgeschaltet werden.

Der rückgesetzte Zustand Q_{R} des Verriegelungszustands 34 der Verriegelungseinheit 20 wird danach bis zu einem neuen Setzvorgang 32 beibehalten.

Der Setzdruck P1 wird in diesem Ausführungsbeispiel auch zum Rücksetzen verwendet. Ein zweiter Rücksetzdruck P2 mit einem noch höheren Druckwert ist somit nicht erforderlich.

In einer anderen Ausführung ist es möglich, dass eine Druckabfolge, d.h. eine zeitliche Folge von einzelnen Druckerhöhungen, zum Setzen und Rücksetzen der Feststellsteuerung 10 verwendet wird. Dazu weist die Selektionseinheit 10 nach dem zweiten Ausführungsbeispiel (Figur 6 und 7) eine Zählstufe mit einem vorher einstellbaren Summenwert auf.

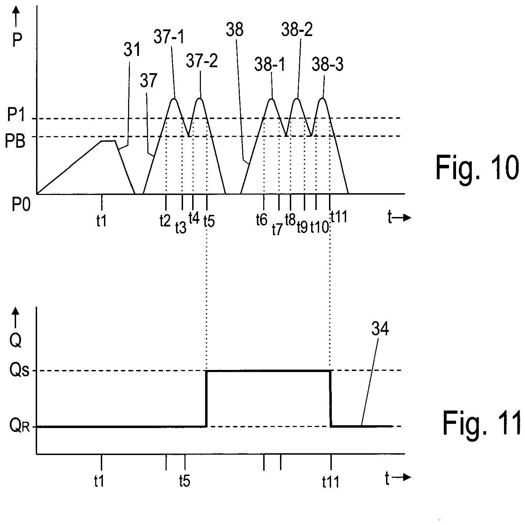

Dies ist nicht dargestellt, aber im Zusammenhang mit den Figuren 10 und 11 leicht zu verstehen.

Figur 10 und 11 zeigen schematische Darstellungen weiterer verschiedener Druckverläufe im Zusammenhang mit einem Zustand einer weiteren Verriegelungseinrichtung 10.

Zum Setzen des T-Flipflops (Feststelleinrichtung 10) ist eine erste Druckabfolge 37 mit zwei Druckerhöhungen 37-1 und 37-2 über den Setzdruck P1 gezeigt. Zwischen den Druckerhöhungen 37-1 und 37-2 wird der maximale Bremsdruck PB nicht unterschritten, so dass der Betriebsbremskolben 9b in seiner zugespannten Stellung bleibt. Die Zählstufe der Selektionseinrichtung 10 öffnet das Steuerventil 35 erst dann, wenn der Summenwert der einzelnen Druckerhöhungen 37-1, 37-2 der Druckabfolge 37 dem vorher eingestellten Summenwert entspricht. Der Summenwert beträgt hier zwei Druckerhöhungen 37-1 und 37-2. Das ist in dem gezeigten Beispiel im Zeitpunkt t5 der Fall. Die Zählstufe kann z.B. ein mechanischer Zähler sein. Dann erfolgt der oben beschriebene Setzvorgang.

Zum Rücksetzen des T-Flipflops (Feststelleinrichtung 10) ist eine zweite Druckabfolge 38 mit drei Druckerhöhungen 38-1, 38-2 und 38-3 über den Setzdruck P1 gezeigt. Zwischen den Druckerhöhungen 38-1, 38-2 und 38-3 wird der maximale Bremsdruck PB nicht unterschritten, so dass der Betriebsbremskolben 9b in seiner zugespannten Stellung bleibt. Die Zählstufe der Selektionseinrichtung 10 öffnet das Steuerventil 35 erst dann, wenn der Summenwert der einzelnen Druckerhöhungen 38-1, 38-2 und 38-3 der Druckabfolge 38 dem vorher eingestellten Summenwert, der hier drei Druckerhöhungen 38-1, 38-2 und 38-3 entspricht, erreicht ist. Das ist hier im Zeitpunkt t10 der Fall. Dann erfolgt der oben beschriebene Rücksetzvorgang.

Die in den Beispielen dargestellten bistabilen Kippstufen mit Druckluftventilen können natürlich auch z.B. mit mechanischen bistabilen Kippstufen realisiert werden. Derartige bistabile mechanische Kippstufen sind beispielsweise in Konstruktionskatalogen beschrieben (Karlheinz Roth, Konstruieren mit Konstruktionskatalogen: Band 2: Kataloge, Springer Verlag, Dezember 2000).

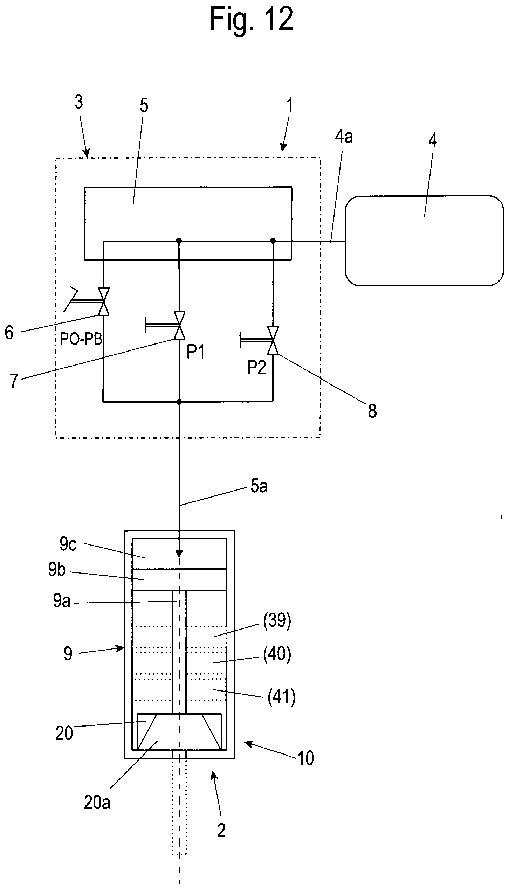

Figur 12 stellt ein schematisches Blockschaltbild eines dritten Ausführungsbeispiels einer erfindungsgemäßen Anordnung 1 eines Bremskrafterzeugers 2 dar.

In dem dritten Ausführungsbeispiel ist im Gegensatz zu den vorherigen Ausführungsbeispielen keine Selektionseinheit 11 vorgesehen. Die Feststellsteuerung 10 weist die schon oben beschriebene Verriegelungseinheit 20 und eine bistabile Schalteinrichtung 20a auf. Die Kolbenstange 9a erstreckt sich durch die Verriegelungseinheit 20 und die bistabile Schalteinrichtung 20a. Die bistabile Schalteinrichtung 20a ist als ein T-Flipflop ausgebildet und kann gemäß entsprechender Konstruktionskataloge (s.o.) aufgebaut und angepasst sein.

Die Funktion des dritten Ausführungsbeispiels wird im Zusammenhang mit den Figuren 3 und 4 erläutert.

Der Bremsvorgang 31 erfolgt im Druckbereich P0 bis PB. Dem maximalen Bremsdruck PB ist eine Betriebsbremskolbenposition 39 des Betriebsbremskolbens 9b zugeordnet. In dieser Position wird keinerlei Setz- oder Rücksetzvorgang ausgelöst.

Wird der Setzdruck P1 in die Bremsleitung 5a eingeleitet, bewegt sich der Betriebsbremskolben 9b weiter in eine Betriebsbremskolbenposition 40, wobei ein Setzvorgang in der bistabilen Schalteinrichtung 20a der Feststellsteuerung 10 ausgelöst wird. Der Betriebsbremskolben 5b wird in dieser Betriebsbremskolbenposition 40 gehalten, auch wenn der Druck in der Bremsleitung 5a auf P0 verringert wird.

Zum Rücksetzen wird die Bremsleitung 5a mit dem Rücksetzdruck P2 beaufschlagt, wobei sich der Betriebsbremskolben 9b noch weiter in eine Betriebsbremskolbenposition 41 bewegt. In dieser Betriebsbremskolbenposition 41 wird ein Rücksetzvorgang in der bistabilen Schalteinrichtung 20a der Feststellsteuerung 10 ausgelöst. Der Betriebsbremskolben 5b bewegt sich dann nach Verringerung des Drucks auf P0 in seine Ausgangsstellung zurück.

Die Werte von Setzdruck P1 und Rücksetzdruck P2 sind wie in dem ersten Ausführungsbeispiel beschrieben.

Die gepunktet dargestellten Betriebsbremskolbenpositionen 39, 40 und 41 sind zur besseren Unterscheidung weit auseinander liegend gezeichnet. Die Abstände dieser Betriebsbremskolbenpositionen 39, 40 und 41 untereinander sind einem Schaltabstand der mechanischen bistabilen Schalteinrichtung 20a der Feststellsteuerung 10 einschließlich eines jeweiligen Sicherheitsabstandes angepasst und können entsprechend unterschiedlich ausfallen.

Es ist in einer Variante dieses dritten Ausführungsbeispiels auch denkbar, dass der Betriebsbremskolben 9b beispielsweise zwei federbelastete Bolzen/Stifte aufweist, die in dem Betriebsbremskolben 9b verschiebbar gelagert sind und jeweils mit einem Setzeingang und einem Rücksetzeingang der mechanischen bistabilen Schalteinrichtung 20a der Feststellsteuerung 10 zusammenwirken. In diesem Fall verbleibt der Betriebsbremskolben 9b bei einem Setzvorgang in der Betriebsbremskolbenposition 39, wobei bei Beaufschlagung mit dem Setzdruck P1 der erste federbelastete Bolzen/Stift so aus dem Betriebsbremskolben 9b in Richtung auf die Verriegelungseinrichtung 20 heraus gedrückt wird und deren Setzeingang betätigt. Der Rücksetzdruck P2 bewirkt dann, dass der zweite federbelastete Bolzen/Stift in ähnlicher Weise aus dem Betriebsbremskolben 9b in Richtung auf die Verriegelungseinrichtung 20 heraus gedrückt wird und deren Rücksetzeingang betätigt. Hierbei kann die bistabile Schalteinrichtung 20a der Feststellsteuerung 10 als ein RS-Flipflop ausgebildet sein. Es ist auch möglich, dass die bistabile Schalteinrichtung 20a ein T-Flipflop ist, wobei dann nur ein federbelasteter Bolzen für den einen Eingang des T-Flipflops erforderlich ist.

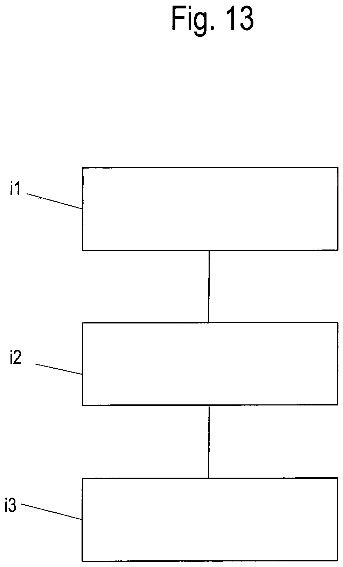

**Figur 13** zeigt ein schematisches Flussdiagramm eines erfindungsgemäßen Verfahrens zum Betreiben des Bremskrafterzeugers 2 in der Anordnung 1.

In einem ersten Verfahrensschritt i1 wird der Bremskrafterzeuger 2, welcher eine Bremsfunktion und eine Park-/Feststellbremsfunktion aufweist, über die Bremsleitung 5a zum Durchführen eines Bremsvorgangs 31 mit einem veränderlichen Bremsdruck in einem Bereich von P0 (Null bar) bis zu einem maximalen Bremsdruck PB beaufschlagt.

Aktivieren bzw. Einschalten der Park-/Feststellbremsfunktion in einem zweiten Verfahrensschritt i2 durch einen Setzvorgang 32, indem über dieselbe Bremsleitung 5a ein Setzdruck P1 eingeleitet wird, der größer als der maximale Bremsdruck PB ist.

In einem dritten Verfahrensschritt wird die Park-/Feststellbremsfunktion deaktiviert, indem über dieselbe Bremsleitung 5a ein Rücksetzdruck P2 eingeleitet wird, der auch größer als der maximale Bremsdruck PB ist.

In einem Unterschritt kann der Rücksetzdruck P2 entweder größer als der Setzdruck P1 oder gleich dem Setzdruck P1 sein.

Alternativ kann auch eine Druckabfolge 37, 38 mit einer Anzahl von Druckerhöhungen 37-1, 37-2; 38-1, 38-2, 38-3 zur Steuerung der Feststellsteuerung 10 verwendet werden, wie schon oben beschrieben wurde.

Die Erfindung ist durch die oben angegebenen Ausführungsbeispiele nicht eingeschränkt, sondern im Rahmen der Ansprüche modifizierbar.

Es ist zum Beispiel denkbar, dass die Schalteinheit 12 und die Verriegelungseinheit 20 innerhalb des Bremszylinders 9 auf der Seite des Betriebsbremskolbens 9b, an welcher die Kolbenstange 9a angebracht ist, angeordnet ist, wobei sich die Kolbenstange 9a durch die Verriegelungseinheit 20 erstreckt.

### Bezugszeichenliste

- 1: Anordnung
- 2: Bremskrafterzeuger
- 3: Betätigungseinheit
- 4: Druckspeicher
- 4a: Zuleitung
- 5: Druckaufbereitung
- 5a: Bremsleitung
- 5b: Eingangsleitung
- 5c, 5d, 5e, 5f, 5g: Leitung
- 6: Betriebsbremsbetätiger
- 7, 8: Feststellbremsbetätiger
- 9: Bremszylinder
- 9a: Kolbenstange
- 9b: Betriebsbremskolben
- 9c: Betriebsbremsdruckkammer
- 10: Feststellsteuerung
- 11: Selektionseinheit
- 12: Schalteinheit
- 13: Setzleitung
- 14: Rücksetzleitung
- 15: Setzeinheit
- 16: Rücksetzeinheit
- 17: Rückkopplungsleitung
- 18: Stellelement
- 19, 19a: Verriegelungsabschnitt
- 20: Verriegelungseinheit
- 20a: Schalteinrichtung
- 21: Setzventil
- 22: Druckselektor
- 23: Selektorleitung
- 24: Rücksetzventil
- 25: Druckselektor
- 26: Selektorleitung
- 27: Stellzylinder
- 27a: Stelldruckkammer
- 28: Stellkolben
- 29: Kraftspeicherelement
- 30: Sperreinheit
- 31: Bremsvorgang
- 32: Setzvorgang
- 33, 33': Rücksetzvorgang
- 34: Verriegelungszustand
- 35: Steuerventil
- 36: Umschalteinheit
- 37, 38: Druckfolge
- 37-1, 37-2; 38-1, 38-2, 38-3: Druckerhöhung
- 39, 40, 41: Betriebsbremskolbenposition
- i1, i2, i3: Verfahrensschritt
- P, P0, P1, P2, PB: Druck
- Q, Qs, Q_{R}: Zustand
- t, t1,...t11: Zeit

## Patentansprüche

1. Anordnung (1) mit einem Bremskrafterzeuger (2) für eine Bremse eines Fahrzeugs, einer Betätigungseinheit (3), einem Druckspeicher (4) und einer Bremsleitung (5a), welche die Betätigungseinheit (3) mit dem Bremskrafterzeuger (2) verbindet, wobei der Bremskrafterzeuger (2) einen Bremszylinder (9) mit einer Betriebsbremsfunktion und einer Park-/Feststellbremsfunktion aufweist,
wobei der Bremszylinder (9) mit einer Feststellsteuerung (10) der Park-/Feststellbremsfunktion versehen ist, wobei die Feststellsteuerung (10) mit der einen Bremsleitung (5a) des Bremszylinders (9) kommuniziert, wobei die Betätigungseinheit (3) von dem Druckspeicher (4) einen veränderlichen Bremsdruck (P0 bis PB), einen Setzdruck (P1) und einen Rücksetzdruck (P2) bereitstellt, wobei die eine Bremsleitung (5a) mit dem veränderlichen Bremsdruck (P0 bis PB), dem Setzdruck (P1) und dem Rücksetzdruck (P2) beaufschlagbar ist,
wobei der Setzdruck (P1) größer als ein maximaler Bremsdruck (PB) des veränderlichen Bremsdrucks (P0 bis PB) ist, und wobei der Rücksetzdruck (P2) größer als der Setzdruck (P1) oder gleich dem Setzdruck (P1) ist, wobei die Betätigungseinheit (3) eine Druckaufbereitung (5), einen Betriebsbremsbetätiger (6), einen ersten Feststellbremsbetätiger (7) und einen zweiten Feststellbremsbetätiger (8) aufweist, wobei Ausgänge der Betätiger (6, 7, 8) untereinander und gemeinsam mit der Bremsleitung (5a) verbunden sind,
wobei der Betriebsbremsbetätiger (6) die Bremsleitung (5a) und somit den Bremskrafterzeuger (2) für die Bremsfunktion mit dem veränderlichen Bremsdruck (P0 bis PB) beaufschlagt, und wobei der erste Feststellbremsbetätiger (7) die Bremsleitung (5a) und somit den Bremskrafterzeuger (2) mit dem Setzdruck (P1) beaufschlagt und damit die Feststellbremsfunktion des Bremskrafterzeugers (2) aktiviert, und wobei der zweite Feststellbremsbetätiger (8) die Bremsleitung (5a) und somit den Bremskrafterzeuger (2) mit dem Rücksetzdruck (P2) beaufschlagt und damit die Feststellbremsfunktion des Bremskrafterzeugers (2) deaktiviert,
wobei die Feststellsteuerung (10) eine Selektionseinheit (11), eine Schalteinheit (12), und eine Verriegelungseinheit (20) umfasst, wobei die Selektionseinheit (11) mit der Bremsleitung (5a) direkt oder indirekt über den Bremszylinder (9) verbunden ist, mit der Schalteinheit (12) zusammenwirkt, wobei die Schalteinheit (12) mit der Verriegelungseinheit (20) gekoppelt ist, und wobei die Verriegelungseinheit (20) in Zusammenwirkung mit einer Kolbenstange (9a) oder/und einem Betriebsbremskolben (9b) des Bremszylinders (9) steht,
wobei die Feststellsteuerung (10) durch Beaufschlagung mit dem Setzdruck (P1) die Verriegelungseinheit (20) aus einer unverriegelten Stellung, in welcher die Verriegelungseinheit (20) und die Kolbenstange (9a) oder/und der Betriebsbremskolben (9b) des Bremszylinders (9) außer Eingriff sind, in eine verriegelte Stellung, in welcher die Verriegelungseinheit (20) und die Kolbenstange (9a) oder/und der Betriebsbremskolben (9b) des Bremszylinders (9) in Eingriff sind und eine Bewegung des Betriebsbremskolbens (9b) blockiert ist, verstellt,
wobei die Selektionseinheit (11) der Feststellsteuerung (10) mit druckabhängigen Ventilen so ausgebildet ist, dass die Selektionseinheit (11) den veränderlichen Bremsdruck (P0 bis PB), den Setzdruck (P1) und den Rücksetzdruck (P2) unterscheidet und sowohl den Setzdruck (P1) als auch den Rücksetzdruck (P2) unabhängig voneinander der Feststellsteuerung (10) bereitstellt,
**dadurch gekennzeichnet, dass** der Setzdruck (P1) und der Rücksetzdruck (P2) jeweils eine Druckabfolge (37, 38) mit einer jeweils unterschiedlichen Anzahl von Druckerhöhungen (37-1, 37-2; 38-1, 38-2, 38-3) bilden, wobei die Selektionseinheit (11) der Feststellsteuerung (10) einen Zähler mit einem vorher festlegbaren Summenwert aufweist.

2. Anordnung (1) nach Anspruch 1, **dadurch gekennzeichnet, dass** die Feststellsteuerung (10) durch Beaufschlagung mit dem Rücksetzdruck (P2) die Verriegelungseinheit (20) aus der verriegelten Stellung in die unverriegelte Stellung zurück verstellt.

3. Anordnung (1) nach Anspruch 1 oder 2, **dadurch gekennzeichnet, dass** die verriegelte Stellung der Verriegelungseinheit (20) und die unverriegelte Stellung der Verriegelungseinheit (20) selbsthaltend ausgebildet sind.

4. Anordnung (1) nach einem der Ansprüche 1 bis 3, **dadurch gekennzeichnet, dass** die Schalteinheit (12) der Feststellsteuerung (10) ein binärer Speicher bzw. ein bistabile Kippstufe mit zwei stabilen Zuständen (Q_{R}, Qs) und zwei Eingängen (R, S) ist, wobei ein Setzeingang (S) durch den Setzdruck (P1) aktivierbar ist, und wobei ein Rücksetzeingang (R) durch den Rücksetzdruck (P2) aktivierbar ist, wobei der erste stabile Zustand (Q_{R}) der unverriegelten Stellung der Verriegelungseinheit (20) zugeordnet ist, und wobei der zweite stabile Zustand (Qs) der verriegelten Stellung der Verriegelungseinheit (20) zugeordnet ist.

5. Anordnung (1) nach einem der Ansprüche 1 bis 4, **dadurch gekennzeichnet, dass** die Selektionseinheit (11) und die Schalteinheit (12) der Feststellsteuerung (10) einen binären Speicher bzw. eine bistabile Kippstufe mit zwei stabilen Zuständen (Q_{R}, Qs) und einem gemeinsamen Eingang als ein T-Flipflop bilden.

6. Anordnung (1) nach einem der vorhergehenden Ansprüche, **dadurch gekennzeichnet, dass** die Feststellsteuerung (10) an dem Bremszylinder (9), an einem Fahrwerk, Rahmen oder/und Drehgestell eines zugeordneten Fahrzeugs angebracht ist, oder/und dass die Feststellsteuerung (10) in dem Bremszylinder (9) angebracht/integriert ist.

7. Anordnung (1) mit einem Bremskrafterzeuger (2) für eine Bremse eines Fahrzeugs, einer Betätigungseinheit (3), einem Druckspeicher (4) und einer Bremsleitung (5a), welche die Betätigungseinheit (3) mit dem Bremskrafterzeuger (2) verbindet, wobei der Bremskrafterzeuger (2) einen Bremszylinder (9) mit einer Betriebsbremsfunktion und einer Park-/Feststellbremsfunktion aufweist,
wobei der Bremszylinder (9) mit einer Feststellsteuerung (10) der Park-/Feststellbremsfunktion versehen ist, wobei die Feststellsteuerung (10) mit der einen Bremsleitung (5a) des Bremszylinders (9) kommuniziert,
wobei die Betätigungseinheit (3) von dem Druckspeicher (4) einen veränderlichen Bremsdruck (P0 bis PB), einen Setzdruck (P1) und einen Rücksetzdruck (P2) bereitstellt, wobei die eine Bremsleitung (5a) mit dem veränderlichen Bremsdruck (P0 bis PB), dem Setzdruck (P1) und dem Rücksetzdruck (P2) beaufschlagbar ist,
wobei der Setzdruck (P1) größer als ein maximaler Bremsdruck (PB) des veränderlichen Bremsdrucks (P0 bis PB) ist, und wobei der Rücksetzdruck (P2) größer als der Setzdruck (P1) oder gleich dem Setzdruck (P1) ist, wobei die Betätigungseinheit (3) eine Druckaufbereitung (5), einen Betriebsbremsbetätiger (6), einen ersten Feststellbremsbetätiger (7) und einen zweiten Feststellbremsbetätiger (8) aufweist, wobei Ausgänge der Betätiger (6, 7, 8) untereinander und gemeinsam mit der Bremsleitung (5a) verbunden sind,
wobei der Betriebsbremsbetätiger (6) die Bremsleitung (5a) und somit den Bremskrafterzeuger (2) für die Bremsfunktion mit dem veränderlichen Bremsdruck (P0 bis PB) beaufschlagt, und wobei der erste Feststellbremsbetätiger (7) die Bremsleitung (5a) und somit den Bremskrafterzeuger (2) mit dem Setzdruck (P1) beaufschlagt und damit die Feststellbremsfunktion des Bremskrafterzeugers (2) aktiviert, und wobei der zweite Feststellbremsbetätiger (8) die Bremsleitung (5a) und somit den Bremskrafterzeuger (2) mit dem Rücksetzdruck (P2) beaufschlagt und damit die Feststellbremsfunktion des Bremskrafterzeugers (2) deaktiviert,
wobei die Feststellsteuerung (10) eine Verriegelungseinheit (20) und eine bistabile Schalteinrichtung (20a) aufweist, wobei die Feststellsteuerung (10) in dem Bremszylinder (9) angeordnet ist,
**dadurch gekennzeichnet, dass** sich eine Kolbenstange (9a) des Bremszylinders (9) durch die Verriegelungseinheit (20) und die bistabile Schalteinrichtung (20a) erstreckt, wobei die bistabile Schalteinrichtung (20a) als ein T-Flipflop ausgebildet ist.

8. Verfahren zum Betreiben eines Bremskrafterzeugers (2), welcher eine Bremsfunktion und eine Park-/Feststellbremsfunktion aufweist, in einer Anordnung (1) nach einem der Ansprüche 1 bis 6, aufweisend die Verfahrensschritte
(i1) Beaufschlagen des Bremskrafterzeugers (2) mit einem veränderlichen Bremsdruck (P0 bis PB) über eine Bremsleitung (5a) zum Durchführen eines Bremsvorgangs (31);
(i2) Aktivieren der Park-/Feststellbremsfunktion durch einen Setzvorgang (32), indem der Bremskrafterzeuger (2) über dieselbe Bremsleitung (5a) mit einem Setzdruck (P1), der größer als der maximale Bremsdruck (PB) ist, beaufschlagt wird; und
(i3) Deaktivieren der Park-/Feststellbremsfunktion durch einen Rücksetzvorgang (33), indem der Bremskrafterzeuger (2) über dieselbe Bremsleitung (5a) mit einem Rücksetzdruck (P2) beaufschlagt wird, der größer als der Setzdruck (P1) oder gleich dem Setzdruck (P1) und größer als der maximale Bremsdruck (PB) ist,
**dadurch gekennzeichnet, dass**
der Setzdruck (P1) und der Rücksetzdruck (P2) jeweils eine Druckabfolge (37, 38) mit einer jeweils unterschiedlichen Anzahl von Druckerhöhungen (37-1, 37-2; 38-1, 38-2, 38-3) bilden, wobei die Selektionseinheit (11) der Feststellsteuerung (10) mit dem Zähler die jeweils unterschiedliche Anzahl von Druckerhöhungen (37-1, 37-2; 38-1, 38-2, 38-3) ermittelt und den Setzvorgang (32) und den Rücksetzvorgang (33) durch einen Vergleich der jeweiligen gezählten Anzahl von Druckerhöhungen (37-1, 37-2; 38-1, 38-2, 38-3) mit dem vorher festlegbaren Summenwert unterscheidet und durchführt.

## Claims

1. Arrangement (1) with a brake force generator (2) for a brake of a vehicle, an actuation unit (3), a pressure accumulator (4) and a brake line (5a), which connects the actuation unit (3) to the brake force generator (2), wherein the brake force generator (2) has a brake cylinder (9) with a service brake function and a parking brake function,
wherein the brake cylinder (9) is provided with a parking controller (10) for the parking brake function, wherein the parking controller (10) communicates with the one brake line (5a) of the brake cylinder (9),
wherein the actuation unit (3) supplies a variable brake pressure (P0 to PB), a set pressure (P1) and a reseating pressure (P2) from the pressure accumulator (4), wherein the variable brake pressure (P0 to PB), the set pressure (P1) and the reseating pressure (P2) can be applied to the one brake line (5a),
wherein the set pressure (P1) is greater than a maximum brake pressure (PB) of the variable brake pressure (P0 to PB), and wherein the reseating pressure (P2) is greater than the set pressure (P1) or equal to the set pressure (P1), wherein the actuation unit (3) has a pressurizer (5), a service brake actuator (6), a first parking brake actuator (7) and a second parking brake actuator (8), wherein outputs of the actuators (6, 7, 8) are connected to each other and jointly to the brake line (5a),
wherein the service brake actuator (6) applies the variable brake pressure (P0 to PB) to the brake line (5a) and thus to the brake force generator (2) for the brake function, and wherein the first parking brake actuator (7) applies the set pressure (P1) to the brake line (5a) and thus to the brake force generator (2) and thereby activates the parking brake function of the brake force generator (2), and wherein the second parking brake actuator (8) applies the reseating pressure (P2) to the brake line (5a) and thus to the brake force generator (2) and thereby deactivates the parking brake function of the brake force generator (2),
wherein the parking controller (10) comprises a selection unit (11), a switching unit (12), and a locking unit (20), wherein the selection unit (11) is connected directly or indirectly to the brake line (5a) via the brake cylinder (9) and interacts with the switching unit (12), wherein the switching unit (12) is coupled with the locking unit (20), and wherein the locking unit (20) interacts with a piston rod (9a) and/or a service brake piston (9b) of the brake cylinder (9),
wherein, by application of the set pressure (P1), the parking controller (10) shifts the locking unit (20) from an unlocked position, in which the locking unit (20) and the piston rod (9a) and/or the service brake piston (9b) of the brake cylinder (9) are disengaged, into a locked position, in which the locking unit (20) and the piston rod (9a) and/or the service brake piston (9b) of the brake cylinder (9) are engaged and a movement of the service brake piston (9b) is blocked,
wherein the selection unit (11) of the parking controller (10) is designed with pressure-dependent valves such that the selection unit (11) distinguishes between the variable brake pressure (P0 to PB), the set pressure (P1) and the reseating pressure (P2) and supplies both the set pressure (P1) and the reseating pressure (P2) independently of one another to the parking controller (10),
**characterized in that the set pressure (P1) and the reseating pressure (P2) each form a pressure sequence (37, 38) with a different number of pressure increases (37-1, 37-2, 38-1, 38-2, 38-3) in each case, wherein the selection unit (11) of the parking controller (10) has** a **counter with a cumulative value that can be defined in advance.**

2. Arrangement (1) according to claim 1, **characterized in that,** by application of the reseating pressure (P2), the parking controller (10) shifts the locking unit (20) back from the locked position into the unlocked position.

3. Arrangement (1) according to claim 1 or 2, **characterized in that** the locked position of the locking unit (20) and the unlocked position of the locking unit (20) are designed to be self-retaining.

4. Arrangement (1) according to any one of claims 1 to 3, **characterized in that** the switching unit (12) of the parking controller (10) is a binary memory and/or a bistable flip-flop with two stable states (Q_{R}, Q_{S}) and two inputs (R, S), wherein a set input (S) can be activated by the set pressure (P1), and wherein a reset input (R) can be activated by the reseating pressure (P2), wherein the first stable state (Q_{R}) is assigned to the unlocked position of the locking unit (20), and wherein the second stable state (Q_{S}) is assigned to the locked position of the locking unit (20).

5. Arrangement (1) according to any one of claims 1 to 4, **characterized in that** the selection unit (11) and the switching unit (12) of the parking controller (10) form a binary memory and/or a bistable flip-flop with two stable states (Q_{R}, Q_{S}) and a common input as a T flip-flop.

6. Arrangement (1) according to any one of the preceding claims, **characterized in that** the parking controller (10) is attached to the brake cylinder (9), to a chassis, frame and/or bogie of an associated vehicle, and/or that the parking controller (10) is attached to/integrated into the brake cylinder (9).

7. Arrangement (1) with a brake force generator (2) for a brake of a vehicle, an actuation unit (3), a pressure accumulator (4) and a brake line (5a), which connects the actuation unit (3) to the brake force generator (2), wherein the brake force generator (2) has a brake cylinder (9) with a service brake function and a parking brake function,
wherein the brake cylinder (9) is provided with a parking controller (10) for the parking brake function, wherein the parking controller (10) communicates with the one brake line (5a) of the brake cylinder (9), wherein the actuation unit (3) supplies a variable brake pressure (P0 to PB), a set pressure (P1) and a reseating pressure (P2) from the pressure accumulator (4), wherein the variable brake pressure (P0 to PB), the set pressure (P1) and the reseating pressure (P2) can be applied to the one brake line (5a),
wherein the set pressure (P1) is greater than a maximum brake pressure (PB) of the variable brake pressure (P0 to PB), and wherein the reseating pressure (P2) is greater than the set pressure (P1) or equal to the set pressure (P1), wherein the actuation unit (3) has a pressurizer (5), a service brake actuator (6), a first parking brake actuator (7) and a second parking brake actuator (8), wherein outputs of the actuators (6, 7, 8) are connected to each other and jointly to the brake line (5a),
wherein the service brake actuator (6) applies the variable brake pressure (P0 to PB) to the brake line (5a) and thus to the brake force generator (2) for the brake function, and wherein the first parking brake actuator (7) applies the set pressure (P1) to the brake line (5a) and thus to the brake force generator (2) and thereby activates the parking brake function of the brake force generator (2), and wherein the second parking brake actuator (8) applies the reseating pressure (P2) to the brake line (5a) and thus to the brake force generator (2) and thereby deactivates the parking brake function of the brake force generator (2), wherein the parking controller (10) has a locking unit (20) and a bistable switching device (20a), wherein the parking controller (10) is arranged in the brake cylinder (9), **characterized in that** a piston rod (9a) of the brake cylinder (9) extends through the locking unit (20) and the bistable switching device (20a), wherein the bistable switching device (20a) is formed as a T flip-flop.

8. Method for operating a brake force generator (2), which has a brake function and a parking brake function, in an arrangement (1) according to any one of claims 1 to 6, comprising the method steps of
(i1) Applying a variable brake pressure (P0 to PB) to the brake force generator (2) via a brake line (5a) to implement a braking process (31),
(i2) Activating the parking brake function by means of a setting process (32), in which a set pressure (P1), which is greater than the maximum brake pressure (PB), is applied to the brake force generator (2) via the same brake line (5a), and
(i3) Deactivating the parking brake function by means of a reset process (33), in which a reseating pressure (P2), which is greater than the set pressure (P1) or equal to the set pressure (P1) and greater than the maximum brake pressure (PB), is applied to the brake force generator (2) via the same brake line (5a),
**characterized in that**
the set pressure (P1) and the reseating pressure (P2) each form a pressure sequence (37, 38) with a different number of pressure increases (37-1, 37-2, 38-1, 38-2, 38-3) in each case, wherein the selection unit (11) of the parking controller (10) determines the different number of pressure increases (37-1, 37-2, 38-1, 38-2, 38-3) in each case with the counter and distinguishes between and implements the setting process (32) and the resetting process (33) by comparing the counted number of pressure increases (37-1, 37-2, 38-1, 38-2, 38-3) with the cumulative value that can be defined in advance.

## Revendications

1. Agencement (1) avec un générateur de force de freinage (2) pour un frein d'un véhicule, une unité d'actionnement (3), un accumulateur de pression (4) et une conduite de frein (5a) qui connecte l'unité d'actionnement (3) au générateur de force de freinage (2), dans lequel le générateur de force de freinage (2) présente un cylindre de frein (9) avec une fonction de frein de service et une fonction de frein de stationnement/immobilisation,
dans lequel le cylindre de frein (9) est doté d'une commande d'immobilisation (10) de la fonction de frein de stationnement/d'immobilisation, dans lequel la commande d'immobilisation (10) communique avec la une conduite de frein (5a) du cylindre de frein (9),
dans lequel l'unité d'actionnement (3) fournit, à partir de l'accumulateur de pression (4), une pression de freinage variable (P0 à PB), une pression d'application (P1) et une pression de réinitialisation (P2), dans lequel la une conduite de frein (5a) peut être sollicitée avec la pression de freinage variable (P0 à PB), la pression d'application (P1) et la pression de réinitialisation (P2),
dans lequel la pression d'application (P1) est supérieure à une pression de freinage maximale (PB) de la pression de freinage variable (P0 à PB), et dans lequel la pression de réinitialisation (P2) est supérieure à la pression d'application (P1) ou égale à la pression d'application (P1), dans lequel l'unité d'actionnement (3) présente une génération de pression (5), un actionneur de frein de service (6), un premier actionneur de frein d'immobilisation (7) et un second actionneur de frein d'immobilisation (8), dans lequel des sorties des actionneurs (6, 7, 8) sont connectées entre elles et conjointement à la conduite de frein (5a),
dans lequel l'actionneur de frein de service (6) sollicite la conduite de frein (5a) et donc le générateur de force de freinage (2) avec la pression de freinage variable (P0 à PB) pour la fonction de freinage, et dans lequel le premier actionneur de frein d'immobilisation (7) sollicite la conduite de frein (5a) et donc le générateur de force de freinage (2) avec la pression d'application (P1) et active ainsi la fonction de frein d'immobilisation du générateur de force de freinage (2), et dans lequel le second actionneur de frein d'immobilisation (8) sollicite la conduite de frein (5a) et donc le générateur de force de freinage (2) avec la pression de réinitialisation (P2) et désactive ainsi la fonction de frein d'immobilisation du générateur de force de freinage (2),
dans lequel la commande d'immobilisation (10) comprend une unité de sélection (11), une unité de commutation (12) et une unité de verrouillage (20), dans lequel l'unité de sélection (11) est connectée à la conduite de frein (5a) directement ou indirectement par l'intermédiaire du cylindre de frein (9), coopère avec l'unité de commutation (12), dans lequel l'unité de commutation (12) est couplée à l'unité de verrouillage (20), et dans lequel l'unité de verrouillage (20) interagit avec une tige de piston (9a) et/ou un piston de frein de service (9b) du cylindre de frein (9),
dans lequel la commande d'immobilisation (10), par sollicitation de la pression d'application (P1), fait passer l'unité de verrouillage (20) d'une position déverrouillée, dans laquelle l'unité de verrouillage (20) et la tige de piston (9a) et/ou le piston de frein de service (9b) du cylindre de frein (9) sont désengagés, à une position verrouillée dans laquelle l'unité de verrouillage (20) et la tige de piston (9a) et/ou le piston de frein de service (9b) du cylindre de frein (9) sont en prise et un mouvement du piston de frein de service (9b) est bloqué,
dans lequel l'unité de sélection (11) de la commande d'immobilisation (10) est conçue avec des soupapes dépendant de la pression de sorte que l'unité de sélection (11) distingue la pression de freinage variable (P0 à PB), la pression d'application (P1) et la pression de réinitialisation (P2) et fournit à la commande d'immobilisation (10) aussi bien la pression d'application (P1) que la pression de réinitialisation (P2) indépendamment l'une de l'autre,
**caractérisé en ce que** la pression d'application (P1) et la pression de réinitialisation (P2) forment respectivement une séquence de pression (37, 38) avec un nombre respectivement différent d'augmentations de pression (37-1, 37-2 ; 38-1, 38-2, 38-3), dans lequel l'unité de sélection (11) de la commande d'immobilisation (10) présente un compteur avec une valeur cumulée pouvant être préalablement fixée.

2. Agencement (1) selon la revendication 1, **caractérisé en ce que** la commande d'immobilisation (10) repasse l'unité de verrouillage (20) de la position verrouillée à la position déverrouillée en appliquant la pression de réinitialisation (P2).

3. Agencement (1) selon la revendication 1 ou 2, **caractérisé en ce que** la position verrouillée de l'unité de verrouillage (20) et la position déverrouillée de l'unité de verrouillage (20) sont conçues pour être autoretenues.

4. Agencement (1) selon l'une quelconque des revendications 1 à 3, **caractérisé en ce que** l'unité de commutation (12) de la commande d'immobilisation (10) est une mémoire binaire ou une bascule bistable avec deux états stables (Q_{R}, Q_{S}) et deux entrées (R, S), dans lequel une entrée d'application (S) peut être activée par la pression d'application (P1) et dans lequel une entrée de réinitialisation (R) peut être activée par la pression de réinitialisation (P2), dans lequel le premier état stable (Q_{R}) est associé à la position déverrouillée de l'unité de verrouillage (20) et dans lequel le second état stable (Q_{S}) est associé à la position verrouillée de l'unité de verrouillage (20).

5. Agencement (1) selon l'une quelconque des revendications 1 à 4, **caractérisé en ce que** l'unité de sélection (11) et l'unité de commutation (12) de la commande d'immobilisation (10) forment une mémoire binaire ou une bascule bistable avec deux états stables (Q_{R}, Q_{S}) et une entrée commune comme une bascule en T.

6. Agencement (1) selon l'une quelconque des revendications précédentes, **caractérisé en ce que** la commande d'immobilisation (10) est fixée sur le cylindre de frein (9), sur un châssis, cadre et/ou bogie d'un véhicule associé, et/ou **en ce que** la commande d'immobilisation (10) est fixée sur/intégrée dans le cylindre de frein (9).

7. Agencement (1) avec un générateur de force de freinage (2) pour un frein d'un véhicule, une unité d'actionnement (3), un accumulateur de pression (4) et une conduite de frein (5a) qui connecte l'unité d'actionnement (3) au générateur de force de freinage (2), dans lequel le générateur de force de freinage (2) présente un cylindre de frein (9) avec une fonction de frein de service et une fonction de frein de stationnement/immobilisation,
dans lequel le cylindre de frein (9) est doté d'une commande d'immobilisation (10) de la fonction de frein de stationnement/d'immobilisation, dans lequel la commande d'immobilisation (10) communique avec la une conduite de frein (5a) du cylindre de frein (9), dans lequel l'unité d'actionnement (3) fournit, à partir de l'accumulateur de pression (4), une pression de freinage variable (P0 à PB), une pression d'application (P1) et une pression de réinitialisation (P2), dans lequel la une conduite de frein (5a) peut être sollicitée avec la pression de freinage variable (P0 à PB), la pression d'application (P1) et la pression de réinitialisation (P2),
dans lequel la pression d'application (P1) est supérieure à une pression de freinage maximale (PB) de la pression de freinage variable (P0 à PB), et dans lequel la pression de réinitialisation (P2) est supérieure à la pression d'application (P1) ou égale à la pression d'application (P1), dans lequel l'unité d'actionnement (3) présente une génération de pression (5), un actionneur de frein de service (6), un premier actionneur de frein d'immobilisation (7) et un second actionneur de frein d'immobilisation (8), dans lequel des sorties des actionneurs (6, 7, 8) sont connectées entre elles et conjointement à la conduite de frein (5a),
dans lequel l'actionneur de frein de service (6) sollicite la conduite de frein (5a) et donc le générateur de force de freinage (2) avec la pression de freinage variable (P0 à PB) pour la fonction de freinage, et dans lequel le premier actionneur de frein d'immobilisation (7) sollicite la conduite de frein (5a) et donc le générateur de force de freinage (2) avec la pression d'application (P1) et active ainsi la fonction de frein d'immobilisation du générateur de force de freinage (2), et dans lequel le second actionneur de frein d'immobilisation (8) sollicite la conduite de frein (5a) et donc le générateur de force de freinage (2) avec la pression de réinitialisation (P2) et désactive ainsi la fonction de frein d'immobilisation du générateur de force de freinage (2), dans lequel la commande d'immobilisation (10) présente une unité de verrouillage (20) et un appareil de commutation bistable (20a), dans lequel la commande d'immobilisation (10) est disposée dans le cylindre de frein (9), **caractérisé en ce qu'**une tige de piston (9a) du cylindre de frein (9) s'étend à travers l'unité de verrouillage (20) et l'appareil de commutation bistable (20a), dans lequel l'appareil de commutation bistable (20a) est conçu comme une bascule en T.

8. Procédé de fonctionnement d'un générateur de force de freinage (2) qui présente une fonction de freinage et une fonction de freinage de stationnement/d'immobilisation dans un agencement (1) selon l'une quelconque des revendications 1 à 6 présentant les étapes de procédé consistant à
(i1) solliciter le générateur de force de freinage (2) avec une pression de freinage variable (P0 à PB) par l'intermédiaire d'une conduite de freinage (5a) pour effectuer un processus de freinage (31) ;
(i2) activer la fonction de frein de stationnement/d'immobilisation par un processus d'application (32) en sollicitant le générateur de force de freinage (2) avec une pression d'application (P1) qui est supérieure à la pression de freinage maximale (PB) par l'intermédiaire de la même conduite de frein (5a) ; et
(i3) désactiver la fonction de frein de stationnement/d'immobilisation par l'intermédiaire d'un processus de réinitialisation (33) en sollicitant le générateur de force de freinage (2) avec une pression de réinitialisation (P2) qui est supérieure à la pression d'application (P1) ou égale à la pression d'application (P2) et supérieure à la pression de freinage maximale (PB) par l'intermédiaire de la même conduite de frein (5a),
**caractérisé en ce que**
la pression d'application (P1) et la pression de réinitialisation (P2) forment respectivement une séquence de pression (37, 38) avec un nombre respectivement différent d'augmentations de pression (37-1, 37-2 ; 38-1, 38-2, 38-3), dans lequel l'unité de sélection (11) de la commande d'immobilisation (10) détermine à l'aide du compteur le nombre respectivement différent d'augmentations de pression (37-1, 37-2 ; 38-1, 38-2, 38-3) et distingue et met en oeuvre le processus d'application (32) et le processus de réinitialisation (33) en comparant le nombre respectif compté d'augmentations de pression (37-1, 37-2 ; 38-1, 38-2, 38-3) à la valeur cumulée pouvant être préalablement fixée.
